# DEMANDE DE BREVET EUROPEEN

(11) **EP 4 656 335 A1**
(43) Date de publication de la demande: **03.12.2025**
(21) Numéro de dépôt: 25179410.3
(22) Date de dépôt: 28.05.2025
(51) Int. Cl.: B25J 9/16

(54) **POSTE ET PROCÉDÉ D'ENGONDAGE AUTOMATISÉ**

(30) Priorité: 30.05.2024 FR 2405622
(71) Demandeur: Moini, Cyrus Bruno Hassan, 01000 Bourg en Bresse (FR)
(72) Inventeur: MOINI, Cyrus, 01000 BOURG EN BRESSE (FR); DUGRAND CAMP SEC, Nicolas, 01000 Bourg en Bresse (FR)
(74) Mandataire: Cabinet Didier Martin

(57) **Abrégé**

- L'invention concerne un poste d'engondage (1) automatisé de premier et deuxième éléments de menuiserie (2), pourvus respectivement de premier et deuxième composants de gond (4), avec :
- des moyens robotisés de manipulation, incluant un organe de préhension (6) dudit premier élément (2) ;
- un dispositif de bridage (8) embarqué par l'organe (6) et embarquant un capteur de position (9),

où des moyens de traitement et de commande exécutent les opérations :
- saisie du premier élément (2) par l'organe (6),
- mise en butée du dispositif de bridage (8) contre le premier élément (2),
- détermination d'une position de référence dudit capteur (9),
- détection de la position dudit deuxième composant par le capteur (9),
- déplacement relatif des éléments (2) par lesdits moyens robotisés, amenant lesdits composants (4) dans une position de coopération déterminée via ladite position de référence et ladite position détectée dudit deuxième composant, où lesdits composants (4) sont attachés ensemble, reliant lesdits éléments (2).

- Engondage de menuiserie, par exemple pour fenêtre, porte, porte-fenêtre

## Description

La présente invention se rapporte au domaine technique général de la menuiserie et plus particulièrement des assemblages de menuiserie destinés à constituer des systèmes d'ouverture, tels que des fenêtres, des portes-fenêtres, des vantaux ou des portes.

La présente invention concerne plus particulièrement un poste d'engondage pour engonder ensemble des premier et deuxième éléments de menuiserie pourvus respectivement de premier et deuxième composants de gond, lesdits premier et deuxième éléments de menuiserie formant respectivement un ouvrant et un dormant ou inversement.

La présente invention concerne également un procédé d'engondage pour engonder ensemble des premier et deuxième éléments de menuiserie pourvus respectivement de premier et deuxième composants de gond, lesdits premier et deuxième éléments de menuiserie formant respectivement un ouvrant et un dormant ou inversement.

L'assemblage d'un ouvrant sur un dormant est bien connu. L'ouvrant, par exemple un battant de fenêtre ou une porte, est destiné à être assemblé à rotation avec un cadre fixe intégré au bâti, afin de réaliser une ouverture refermable. L'assemblage à rotation est réalisé via des composants de gond, ou ferrures, dont certains sont communément attachés à l'ouvrant, tandis que d'autres, complémentaires des précédents, sont attachés au dormant. Les composants de gond peuvent être des paumelles elles-mêmes composées de charnons, des charnières, des bras de compas, etc. et assurent la rotation de l'ouvrant relativement au dormant.

L'une des méthodes parmi les plus connues et les plus simples, est de positionner un charnon femelle attaché à l'ouvrant sur un charnon mâle attachée au dormant, et de les laisser s'emboiter l'une à l'autre grâce à l'axe dont est pourvu le charnon femelle. Cette méthode peut être réalisée manuellement, par exemple sur site, c'est-à-dire à l'endroit où l'ensemble ouvrant/dormant va être utilisé couramment, ou de manière partiellement automatisée, en atelier, où le dormant est généralement un cadre, c'est-à-dire un châssis pour le moment libre mais destiné à être intégré de manière fixe à un bâtiment.

Cette méthode connue se complique néanmoins dans le cas de pose de ferrures alternatives, notamment les ferrures d'ouvertures à entrebâillement, telles que celles utilisées pour les fenêtres à soufflet ou oscillo-battantes, dans lesquelles une ouverture de la fenêtre selon un axe de rotation horizontal est possible. En particulier, la pose des ferrures permettant à la fois l'entrebâillement et la limitation de ce dernier est particulièrement difficile à automatiser.

Ces ferrures comprennent notamment un bras de compas conçu pour être monté à rotation à la fois avec l'ouvrant à une première extrémité, et avec le dormant à une seconde extrémité. Ce bras de compas permet notamment de réaliser l'ouverture limitée de l'ouvrant par rapport au dormant lors de l'ouverture de type soufflet de la fenêtre, c'est-à-dire pour ménager une ouverture vers le haut ou le bas de la fenêtre. Les tolérances mécaniques importantes, autorisées par le débattement de ce bras de compas, obligent systématiquement à réaliser une intervention manuelle, afin de placer le bras de compas correctement vis-à-vis de l'ouvrant ou du dormant auquel il n'est pas encore relié. Il n'existe pas de solution actuelle permettant, une fois que le bras de compas est relié à l'un de l'ouvrant ou du dormant, de le relier de manière automatique à l'autre, pour finaliser l'engondage de l'ouvrant et du dormant ensemble.

Les objets assignés à l'invention visent par conséquent à répondre à la problématique qui précède et à proposer un nouveau poste d'engondage automatisé pour engonder ensemble des premier et deuxième éléments de menuiserie, qui tout en étant particulièrement simple et rapide à mettre en œuvre, permet d'augmenter significativement la productivité des opérations d'engondage ouvrant/dormant en atelier.

Un autre objet de l'invention vise à proposer un nouveau poste d'engondage automatisé pour engonder ensemble des premier et deuxième éléments de menuiserie qui est universel et compatible avec différentes formes et dimensions de premiers et deuxièmes éléments de menuiserie, c'est-à-dire différentes formes et dimensions d'ouvrants et de dormants.

Un autre objet de l'invention vise à proposer un nouveau poste d'engondage automatisé pour engonder ensemble des premier et deuxième éléments de menuiserie qui est compatible avec différentes formes et dimensions de ferrures.

Un autre objet de l'invention vise à proposer un nouveau poste d'engondage automatisé pour engonder ensemble des premier et deuxième éléments de menuiserie qui est particulièrement fiable.

Un autre objet de l'invention vise à proposer un nouveau poste d'engondage automatisé pour engonder ensemble des premier et deuxième éléments de menuiserie qui minimise tout risque d'erreur de la part des opérateurs.

Un autre objet de l'invention vise à proposer un nouveau poste d'engondage automatisé pour engonder ensemble des premier et deuxième éléments de menuiserie qui augmente significativement l'automatisation, et donc la vitesse et le caractère répétable, de l'engondage d'ouvrants et de dormants.

Un autre objet de l'invention vise à proposer un nouveau poste d'engondage automatisé pour engonder ensemble des premier et deuxième éléments de menuiserie qui permet de minimiser la main d'œuvre nécessaire.

Un autre objet de l'invention vise à proposer un nouveau poste d'engondage automatisé pour engonder ensemble des premier et deuxième éléments de menuiserie qui permet de diminuer significativement le risque de blessure d'un opérateur ou de dégât matériel.

Un autre objet de l'invention vise à proposer un nouveau poste d'engondage automatisé pour engonder ensemble des premier et deuxième éléments de menuiserie qui est particulièrement facile et peu coûteux à entretenir.

Un autre objet de l'invention vise à proposer un nouveau poste d'engondage automatisé pour engonder ensemble des premier et deuxième éléments de menuiserie qui est compatible avec l'utilisation d'éléments de menuiserie, c'est-à-dire d'ouvrants et de dormants, de différentes natures, que ce soit en bois, en PVC, en métal, etc.

Un autre objet de l'invention vise à proposer un nouveau poste d'engondage automatisé pour engonder ensemble des premier et deuxième éléments de menuiserie qui permet de simplifier le processus de fabrication d'un ensemble ouvrant/dormant.

Un autre objet de l'invention vise à proposer un nouveau poste d'engondage automatisé pour engonder ensemble des premier et deuxième éléments de menuiserie qui permet de diminuer la surface de l'atelier et/ou de limiter l'investissement en machine et/ou outillage.

Un autre objet de l'invention vise à proposer un nouveau poste d'engondage automatisé pour engonder ensemble des premier et deuxième éléments de menuiserie qui est compatible avec différentes ouvertures (portes, fenêtres, vantaux, etc.).

Un autre objet de l'invention vise à proposer un nouveau poste d'engondage automatisé pour engonder ensemble des premier et deuxième éléments de menuiserie qui est particulièrement facile et rapide à fabriquer tout en étant bon marché.

Un autre objet de l'invention vise à proposer un nouveau poste d'engondage automatisé pour engonder ensemble des premier et deuxième éléments de menuiserie qui est, au moins en partie, aisément fabricable avec les opérateurs et les machines actuellement disponibles sur le marché.

Un autre objet de l'invention vise à proposer un nouveau poste d'engondage automatisé pour engonder ensemble des premier et deuxième éléments de menuiserie qui ne nécessite pas de d'investissements démesuré pour être installé sur ou à la place d'un poste d'engondage préexistant, en réutilisant au moins en partie des éléments communs de ce dernier.

Un autre objet de l'invention vise à proposer un nouveau poste d'engondage automatisé pour engonder ensemble des premier et deuxième éléments de menuiserie dont la conception lui permet de présenter une structure simple et robuste.

Un autre objet de l'invention vise à proposer un nouveau poste d'engondage automatisé pour engonder ensemble des premier et deuxième éléments de menuiserie de différentes natures, par exemple des ouvertures oscillo-battante, des ouvertures à la française, des ouvertures à l'anglaise, etc.

Un autre objet de l'invention vise par ailleurs à proposer un nouveau procédé d'engondage automatisé pour engonder ensemble des premier et deuxième éléments de menuiserie, qui tout en étant particulièrement simple et rapide à mettre en œuvre, permet d'augmenter significativement la productivité des opérations d'engondage ouvrant/dormant en atelier.

Les objets assignés à l'invention sont atteints à l'aide d'un poste d'engondage automatisé pour engonder ensemble des premier et deuxième éléments de menuiserie pourvus respectivement de premier et deuxième composants de gond, lesdits premier et deuxième éléments de menuiserie formant respectivement un ouvrant et un dormant ou inversement, ledit poste d'engondage comprenant :
- des moyens robotisés de manipulation pour manipuler au moins ledit premier élément de menuiserie, lesdits moyens robotisés de manipulation incluant un organe de préhension dudit premier élément de menuiserie,
- un dispositif de bridage embarqué par ledit organe de préhension et monté mobile par rapport à ce dernier,
- un premier capteur de position embarqué par ledit dispositif de bridage,
ledit poste d'engondage comprenant des moyens de traitement et de commande conçus pour exécuter la séquence d'opérations suivante :
- saisie du premier élément de menuiserie par lesdits moyens robotisés de manipulation, pour l'immobiliser par rapport audit organe de préhension ;
- mise en butée du dispositif de bridage contre le premier élément de menuiserie, ledit dispositif de bridage étant ainsi situé à une distance prédéterminée de, et/ou en butée contre, ledit premier composant de gond,
- détermination d'une première position de référence correspondant à la position dudit premier capteur de position par rapport audit premier composant de gond,
- détection de la position dudit deuxième composant de gond au moyen dudit premier capteur de position,
- déplacement relatif primaire desdits premier et deuxième éléments de menuiserie par lesdits moyens robotisés de manipulation, pour amener lesdits premier et deuxième composants de gond dans une position relative de coopération primaire qui est déterminée à partir à la fois de ladite première position de référence et de la position détectée dudit deuxième composant de gond, ladite position relative de coopération primaire permettant d'attacher lesdits premier et deuxième composants de gond l'un à l'autre pour relier ensemble lesdits premier et deuxième éléments de menuiserie.

Les objets assignés à l'invention sont également atteints à l'aide d'un procédé d'engondage automatisé pour engonder ensemble des premier et deuxième éléments de menuiserie pourvus respectivement de premier et deuxième composants de gond à l'aide d'un poste d'engondage, lesdits premier et deuxième éléments de menuiserie formant respectivement un ouvrant et un dormant ou inversement, ledit poste d'engondage comprenant :
- des moyens robotisés de manipulation pour manipuler au moins ledit premier élément de menuiserie, lesdits moyens robotisés de manipulation incluant un organe de préhension dudit premier élément de menuiserie,
- un dispositif de bridage embarqué par ledit organe de préhension et monté mobile par rapport à ce dernier,
- un premier capteur de position embarqué par ledit dispositif de bridage,
- des moyens de traitement et de commande,
dans lequel les moyens de traitement et de commande exécutent la séquence d'opérations suivante :
- saisie du premier élément de menuiserie par lesdits moyens robotisés de manipulation, pour l'immobiliser par rapport audit organe de préhension ;
- mise en butée du dispositif de bridage contre le premier élément de menuiserie, ledit dispositif de bridage étant ainsi situé à une distance prédéterminée de, et/ou en butée contre, ledit premier composant de gond,
- détermination d'une première position de référence correspondant à la position dudit premier capteur de position par rapport audit premier composant de gond,
- détection de la position dudit deuxième composant de gond au moyen dudit premier capteur de position,
- déplacement relatif primaire desdits premier et deuxième éléments de menuiserie par lesdits moyens robotisés de manipulation, pour amener lesdits premier et deuxième composants de gond dans une position relative de coopération primaire qui est déterminée à partir à la fois de ladite première position de référence et de la position détectée dudit deuxième composant de gond, ladite position relative de coopération primaire permettant d'attacher lesdits premier et deuxième composants de gond l'un à l'autre pour relier ensemble lesdits premier et deuxième éléments de menuiserie.

D'autres particularités et avantages de l'invention apparaîtront et ressortiront plus en détail à la lecture de la description faite ci-après, en référence aux dessins annexés, donnés uniquement à titre d'exemples purement illustratifs et non limitatifs, dans lesquels :

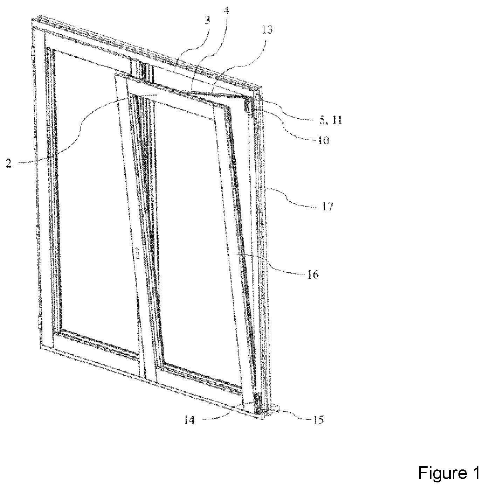

La Figure 1 illustre, selon une vue schématique en perspective de dessus, un assemblage connu de menuiserie, formé d'un ouvrant et d'un dormant engondés ensemble, notamment à l'aide d'un compas d'entrebâillement permettant audit ouvrant de s'ouvrir vers le dessus selon un axe de rotation horizontal, cet engondage étant typiquement l'un de ceux pouvant être réalisés par le poste d'engondage automatisé de l'invention.

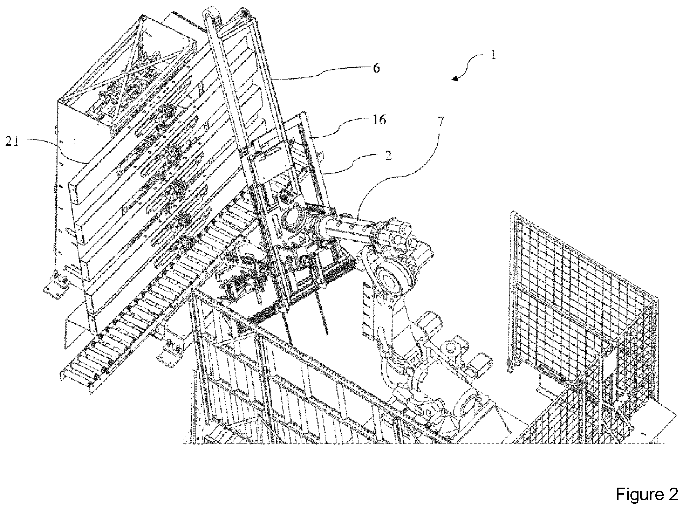

La Figure 2 illustre, selon une vue schématique en perspective de dessus, un poste d'engondage conforme à un mode de réalisation de l'invention, ainsi qu'un premier élément de menuiserie, ici un ouvrant, embarqué par un organe de préhension faisant partie de moyens robotisés de manipulation du poste d'engondage.

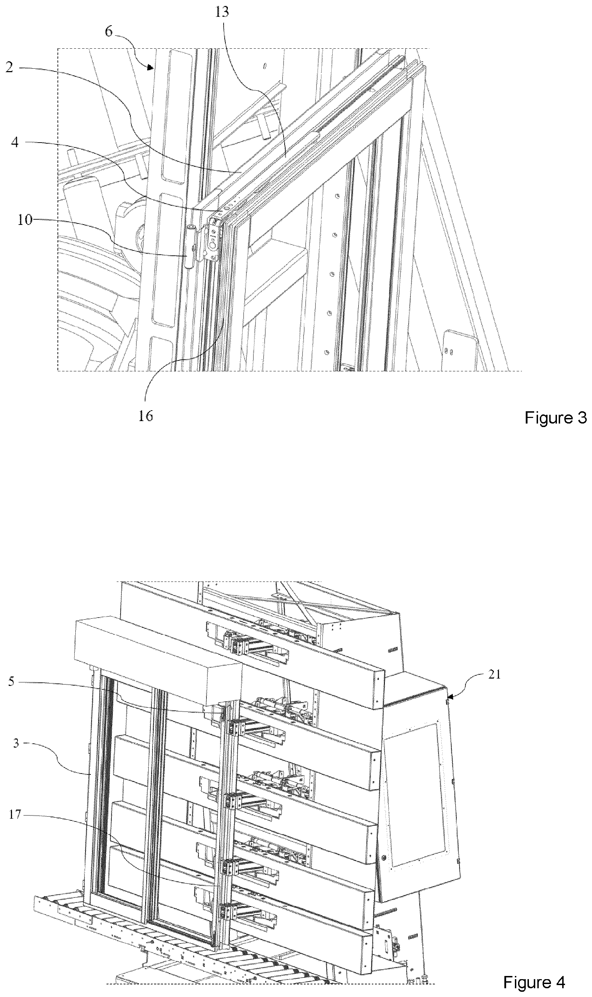

La Figure 3 illustre, selon une vue schématique en perspective, un détail du premier élément de menuiserie de la figure 2, où ce dernier est muni d'un premier composant de gond, constitué ici par un compas d'entrebâillement dont le palier ouvrant et la totalité du bras de compas sont visibles, le bras étant en position repliée, rabattu contre le premier élément de menuiserie.
La Figure 4 illustre, selon une vue schématique en perspective de devant, une partie des moyens robotisés du poste d'engondage automatisé de la figure 2, comprenant un organe de déplacement et/ou de blocage en position d'un deuxième élément de menuiserie, également illustré, et constitué ici par un dormant bloqué en position par ledit organe de déplacement et/ou de blocage.

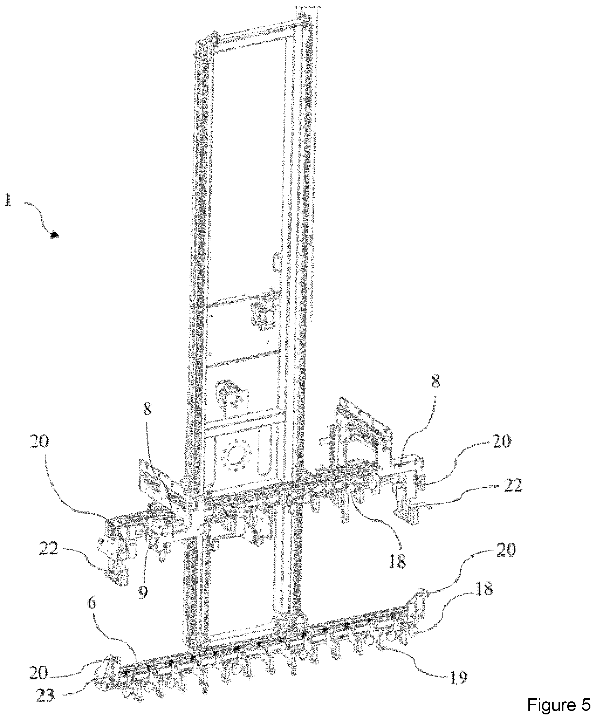

La Figure 5 illustre, selon une vue schématique en perspective de devant, une partie du poste d'engondage similaire à celui de la figure 2, comprenant l'organe de préhension et un dispositif de bridage embarqué par l'organe de préhension.

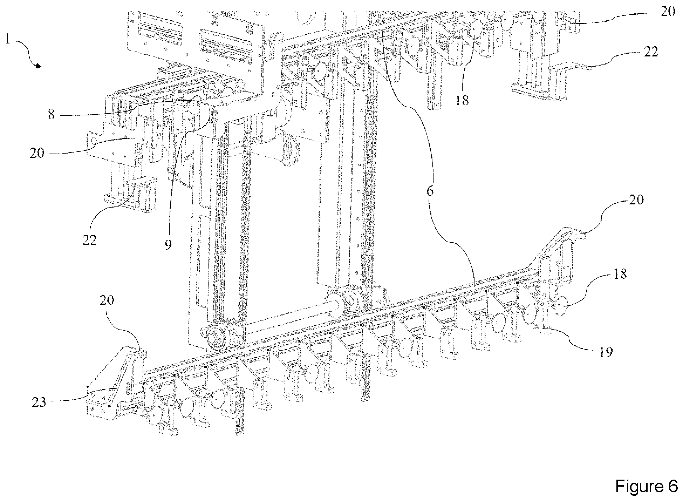

La Figure 6 illustre, selon une vue schématique en perspective de devant, un détail de la figure 5, en partie inférieure de celle-ci.

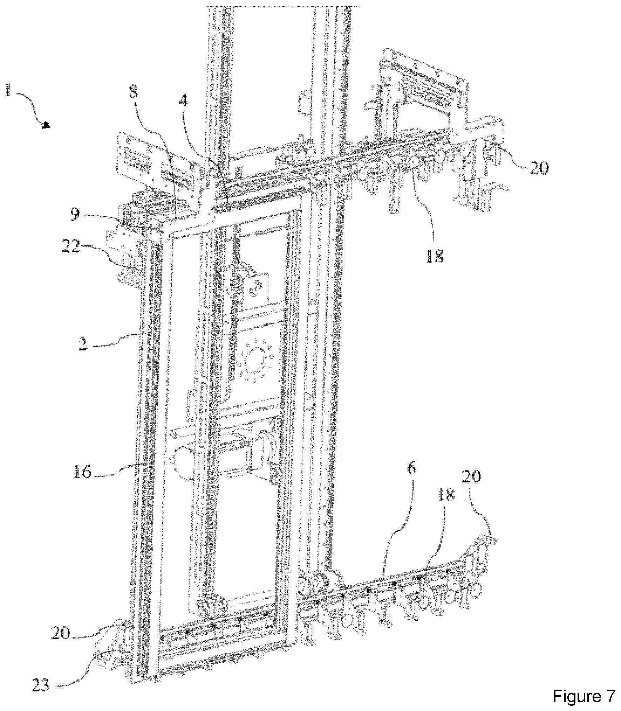

La Figure 7 illustre, selon une vue schématique en perspective de devant, les mêmes éléments qu'à la figure 5, à la différence qu'un premier élément de menuiserie, ici un ouvrant, est désormais embarqué par l'organe de préhension et que le dispositif de bridage est en butée contre le premier élément de menuiserie, ainsi que contre le premier composant de gond, au niveau du coin supérieur gauche du premier élément de menuiserie.

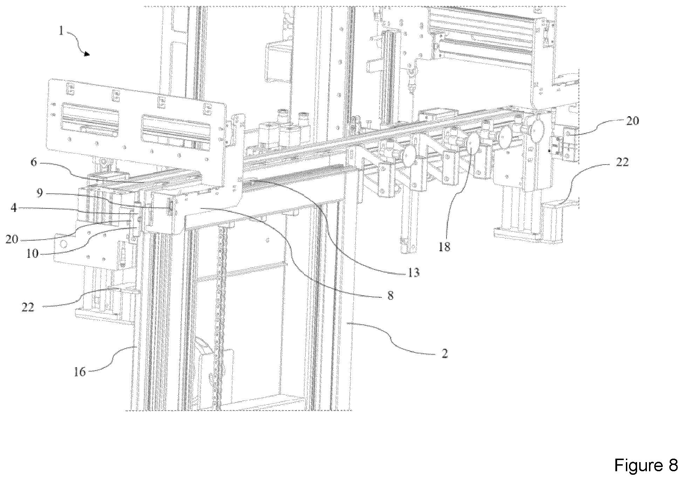

La Figure 8 illustre, selon une vue schématique en perspective, un détail de la figure 7, représentant en particulier :
   - une partie de premier élément de menuiserie, en l'occurrence le coin supérieur gauche de ce dernier,
   - un premier composant de gond attaché au premier élément de menuiserie et constitué ici par un compas d'entrebâillement comprenant un palier ouvrant et un bras de compas dont seule une partie est visible,
   - le dispositif de bridage, mis en butée contre le premier élément de menuiserie, et ici également contre le premier composant de gond, et
   - un premier capteur de position, embarqué par le dispositif de bridage, et positionné sensiblement au niveau du palier ouvrant.

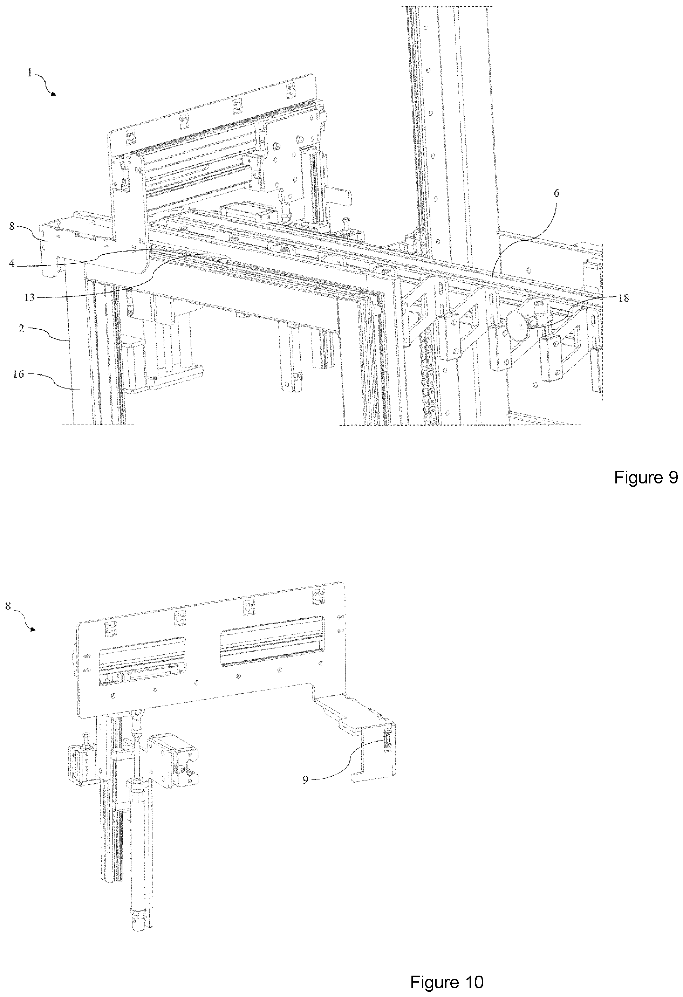

La Figure 9 illustre, selon une vue schématique en perspective depuis un autre point de vue, les mêmes éléments que ceux de la figure 8, à la différence que le palier ouvrant et le premier capteur de position ne sont plus visibles mais cachés par le dispositif de bridage.
La Figure 10 illustre, selon une vue schématique en perspective, le dispositif de bridage des figures 2 et 5 à 8, ainsi que le premier capteur de position qu'il embarque, représentés sans le reste du poste d'engondage ni les premier et deuxième éléments de menuiserie.

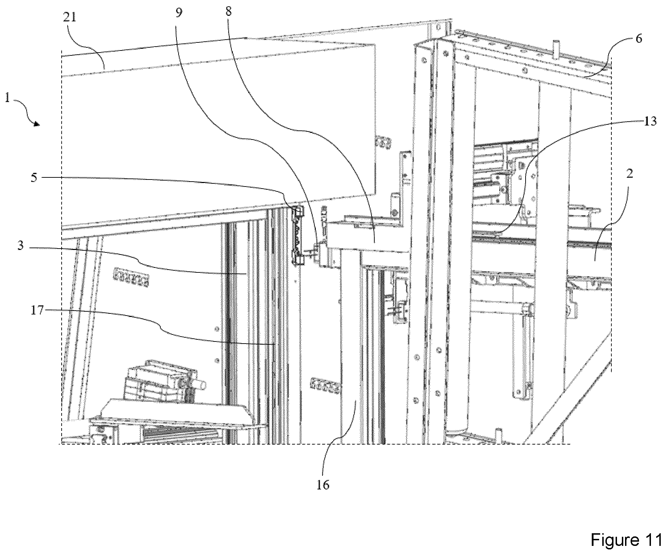

La Figure 11 illustre, selon une vue schématique en perspective, une partie du poste d'engondage et une partie du premier élément de menuiserie de la figure 2, ainsi qu'une partie du deuxième élément de menuiserie de la figure 4, où l'on voit le premier capteur de position détecter la position du deuxième composant de gond dont est muni le deuxième élément de menuiserie, afin de procéder à l'engondage. Le premier composant de gond est caché par le dispositif de bridage, à l'exception d'une partie du bras de compas.

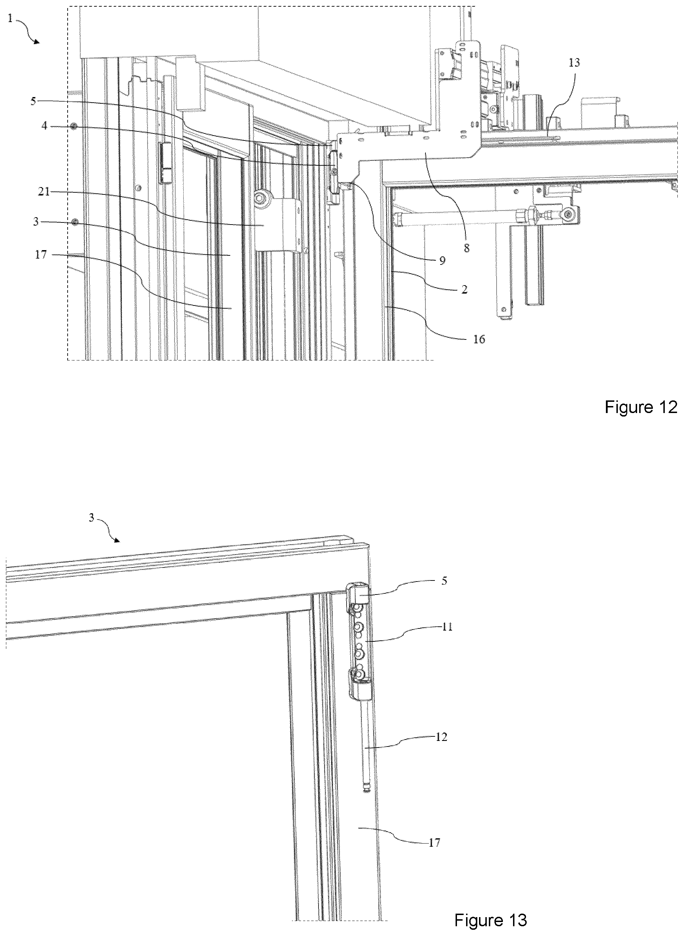

La Figure 12 illustre, selon une vue schématique en perspective, la fin de l'opération d'engondage initiée à la figure 11 par le poste d'engondage selon le mode de réalisation illustré aux autres figures, les premier et deuxième éléments de menuiserie étant dans une position relative de coopération primaire.
La Figure 13 illustre, selon une vue schématique en perspective, un deuxième composant de gond attaché à un deuxième élément de menuiserie selon le même mode de réalisation que les figures précédentes, où le deuxième composant de gond est un palier dormant muni d'un axe de liaison prêt à être pousser vers le haut pour relier le deuxième composant de gond au premier composant de gond (ce dernier n'étant pas illustré dans cette figure).

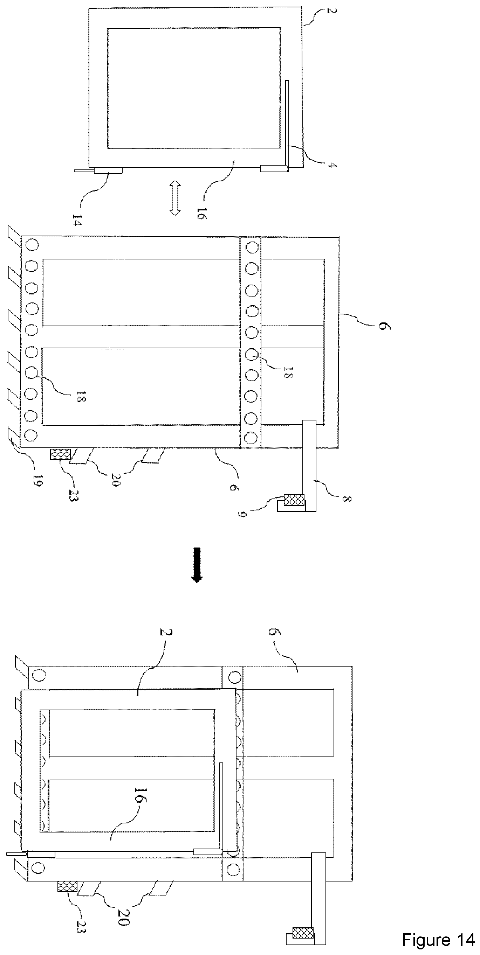

La Figure 14 illustre de manière schématique le début d'une opération de saisie, par un poste d'engondage conforme à l'invention, d'un premier élément de menuiserie par des moyens robotisés de manipulation, pour immobiliser ledit premier élément de menuiserie par rapport à l'organe de préhension, incluant une première solidarisation du premier élément de menuiserie avec des moyens de retenue, ainsi que l'embarquement du premier élément de menuiserie par l'organe de préhension, finalisé dans la figure de droite.

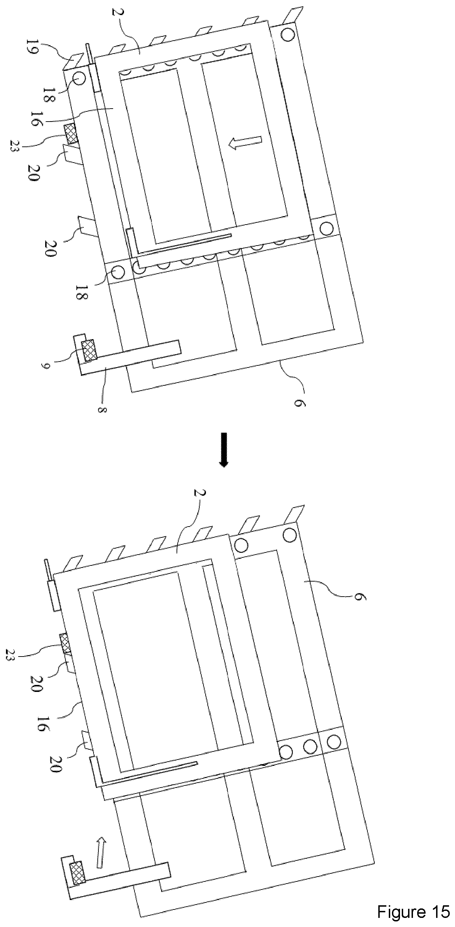

La Figure 15 illustre la suite de l'opération de saisie de la figure 14, où on procède au basculement du premier élément de menuiserie par l'organe de préhension (dessin de gauche), puis à une désolidarisation du premier élément de menuiserie et des moyens de retenue pour faire glisser par gravité le premier élément de menuiserie 2 jusqu'à ce que qu'il rentre en contact avec les moyens de butée (dessin de droite).

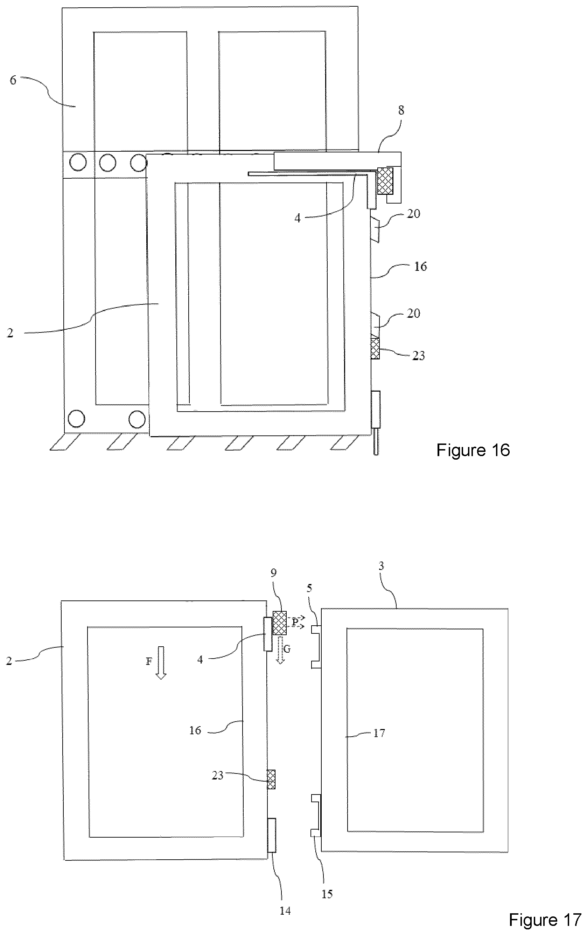

La Figure 16 illustre la fin de l'opération de saisie de la figure 15, où il a été procédé à un rebasculement du premier élément de menuiserie par l'organe de préhension, ainsi qu'à une deuxième solidarisation du premier élément de menuiserie et des moyens de retenue, le premier élément de menuiserie étant alors dans une position de mise en référence relativement à l'organe de préhension, suivie de la mise en butée du dispositif de bridage contre le premier élément de menuiserie et contre le premier composant de gond.
La Figure 17 illustre, selon une vue de côté, un schéma de principe d'une opération de balayage primaire, ici verticale, d'un deuxième composant de gond par un premier capteur, avant engondage, réalisée par un poste d'engondage d'une variante particulière de l'invention où les dimensions et les différents éléments illustrés ne représentent pas la réalité mais sont seulement représentés à titre indicatif pour la bonne compréhension, et où seuls sont représentés des premier et deuxième éléments de menuiserie respectivement à gauche et à droite, des premier et second capteurs de position respectivement en haut et en bas, et des premier, deuxième, troisième et quatrième composants de gond.

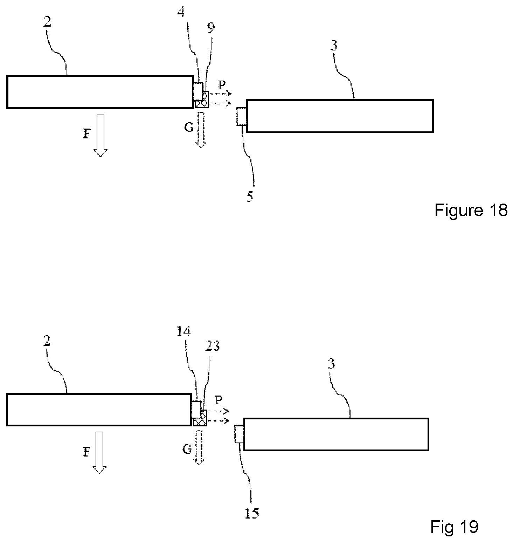

La Figure 18 illustre, selon une vue de dessus, des éléments de la figure 17, pour représenter un schéma de principe d'une opération de balayage secondaire, ici horizontale, du deuxième composant de gond par le premier capteur, avant engondage.
La Figure 19 illustre, selon une vue de dessous, des éléments de la figure 17, pour représenter un schéma de principe d'une opération de balayage tertiaire, ici horizontale, du quatrième composant de gond par le second capteur, avant engondage.

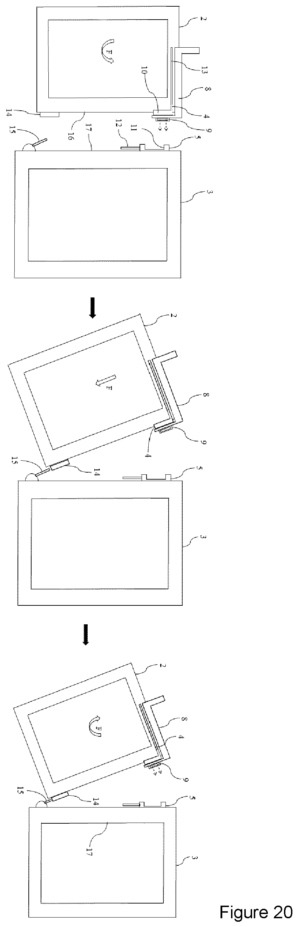

La Figure 20 illustre un schéma de principe du début d'une opération d'engondage réalisée par le poste d'engondage selon une variante de l'invention, selon une vue schématique de côté, où les dimensions et les différents éléments représentés ne représentent pas la réalité mais sont seulement représenté à titre indicatif pour la bonne compréhension, et où sont représentés des premier et deuxième éléments de menuiserie respectivement à gauche et à droite, le dispositif de bridage, le capteur de position, et des composants de gond.

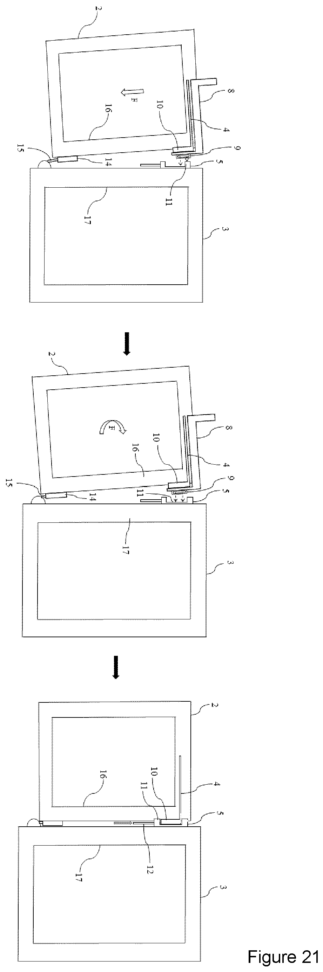

La Figure 21 illustre un schéma de principe de la suite de l'opération d'engondage de la figure 20.

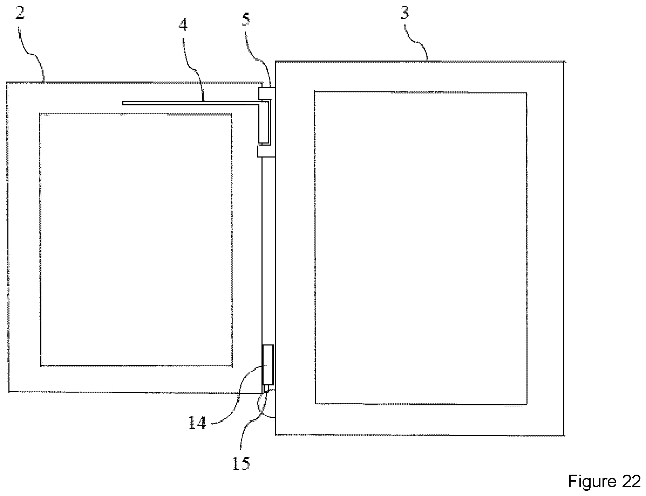

La Figure 22 illustre la fin de l'opération d'engondage de la figure 21, les premier et deuxième éléments de menuiserie ayant été complètement engondés ensemble.

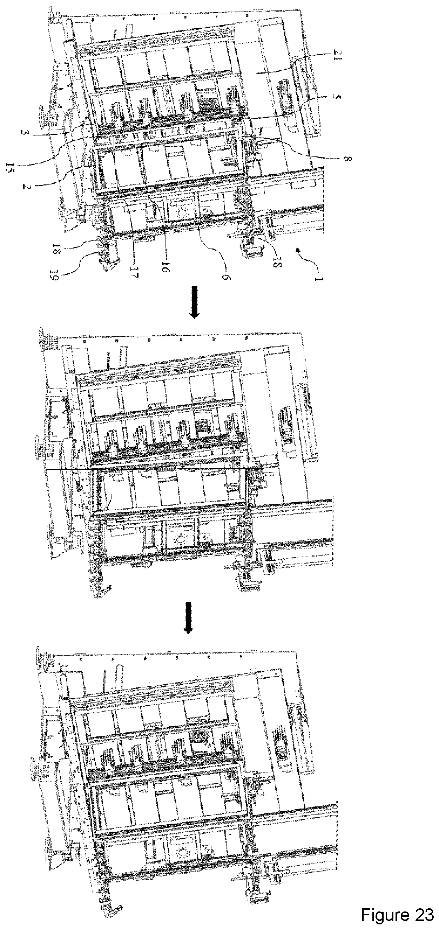

La Figure 23 illustre un poste d'engondage selon un mode particulier de réalisation de l'invention, similaire au mode de réalisation illustré aux figures 2 à 12, réalisant les étapes des figures 20 à 22 de manière condensée.

Selon un premier aspect de l'invention, celle-ci concerne un poste d'engondage 1 automatisé pour engonder ensemble des premier et deuxième éléments de menuiserie 2, 3 pourvus respectivement de premier et deuxième composants de gond 4, 5, lesdits premier et deuxième éléments de menuiserie 2, 3 formant respectivement un ouvrant et un dormant ou inversement. De manière avantageuse, les premier et deuxième éléments de menuiserie 2, 3 embarquent respectivement lesdits premier et deuxième composants de gond 4, 5. Bien évidemment, ledit deuxième composant de gond 5 est de préférence complémentaire dudit premier composant de gond 4 et est avantageusement destiné à être attaché à ce dernier pour relier ensemble lesdits premier et deuxième éléments de menuiserie 2, 3. Dans une variante particulière de l'invention, comme d'ailleurs celle illustrée aux figures, ledit premier élément de menuiserie 2 est un ouvrant. Par exemple, le premier élément de menuiserie 2 est un battant destiné à être monté mobile en rotation par rapport au deuxième élément de menuiserie 3, en particulier un battant de fenêtre ou de porte-fenêtre, ou encore de vantail. Dans cette même variante particulière, ledit deuxième élément de menuiserie 3 est un dormant, par exemple un cadre dormant, en particulier un châssis dormant destiné à être intégré de manière fixe à une structure. Bien entendu, l'inverse pourrait également être possible, c'est-à-dire le premier élément de menuiserie 2 pourrait constituer un dormant tel que susmentionné, et le deuxième élément de menuiserie 3 pourrait constituer un ouvrant tel que mentionné ci-avant. Le poste d'engondage 1 de l'invention est donc de préférence conçu pour engonder de manière automatique, c'est-à-dire sans ou avec le minimum possible d'intervention humaine, lesdits premier et deuxième éléments de menuiserie 2, 3 en atelier, c'est-à-dire avant l'installation de ces derniers aux sein d'une structure, généralement un bâtiment. Celui du premier et deuxième éléments de menuiserie 2, 3 qui constitue le dormant constitue donc, dans le cadre de l'invention, un objet avantageusement indépendant d'un bâti, manipulable, et destiné à être intégré à un tel bâti après l'engondage avec celui du premier et deuxième éléments de menuiserie 2, 3 qui constitue l'ouvrant.

Assez classiquement, l'ouvrant peut comprendre quatre longerons reliés les uns aux autres, formant un cadre de châssis ouvrant, avec par exemple entre lesdits longerons une vitre solidarisée à ces derniers. Alternativement, les longerons de l'ouvrant constituent uniquement des bords de ce dernier, et l'espace entre eux est inoccupé ou occupé par un autre matériau qu'une vitre (bois, métal, etc.). Le dormant peut par ailleurs comprendre quatre longerons reliés les uns aux autres, formant un cadre de châssis dormant. Que ce soit pour l'ouvrant ou le dormant, chaque longeron est avantageusement perpendiculaire aux deux longerons adjacents auxquels il est attaché, et parallèle au quatrième longeron auquel il n'est pas directement attaché (mais relié à ce dernier via les deux longerons adjacents). L'ouvrant et le dormant présentent avantageusement chacun quatre coins respectifs, chaque coin étant formé par l'aboutement de deux longerons adjacents.

Préférentiellement, et de manière connue en tant que telle, lesdits premier et deuxième composants de gond 4, 5 sont conçus pour coopérer mécaniquement, une fois attachés l'un à l'autre, en étant mobile en rotation l'un par rapport à l'autre.

Selon un deuxième aspect de l'invention, celle-ci concerne un procédé d'engondage automatisé pour engonder ensemble des premier et deuxième éléments de menuiserie pourvus respectivement de premier et deuxième composants de gond à l'aide d'un poste d'engondage 1, lesdits premier et deuxième éléments de menuiserie formant respectivement un ouvrant et un dormant ou inversement.

Bien évidemment, les éléments des premier et deuxième aspects de l'invention qui sont décrits de la même façon sont avantageusement communs, et s'appliquent aux deux aspects de l'invention. Par exemple, le poste d'engondage 1 du premier aspect de l'invention est de préférence le même que celui mis en œuvre dans le procédé d'engondage automatisé de l'invention.

Selon l'invention, et comme illustré aux figures ledit poste d'engondage 1 comprend au moins des moyens robotisés de manipulation pour manipuler au moins ledit premier élément de menuiserie 2. Lesdits moyens robotisés de manipulation incluent au moins un organe de préhension 6 dudit premier élément de menuiserie 2. Avantageusement, comme illustré à la figure 2 notamment, lesdits moyens robotisés comprennent au moins un bras de robot 7 à plusieurs axes distincts, de préférence à au moins quatre axes, plus avantageusement à six axes, ledit bras de robot 7 étant relié audit organe de préhension 6. Plus précisément, ledit organe de préhension 6 se trouve avantageusement au bout du bras de robot 7. Ainsi, de manière avantageuse, ledit poste d'engondage 1 est conçu pour pouvoir saisir et placer le premier élément de menuiserie 2 dans n'importe quelle position, ou selon n'importe quelle orientation spatiale, par exemple relativement à un bâti fixe au sein d'un atelier accueillant le poste d'engondage.

Selon l'invention, ledit poste d'engondage 1 comprend en outre au moins :
- un dispositif de bridage 8 embarqué par ledit organe de préhension 6 et monté mobile par rapport à ce dernier,
- un premier capteur de position 9 embarqué par ledit dispositif de bridage 8.

Avantageusement, ledit dispositif de bridage 8 est monté mobile au moins à translation par rapport à l'organe de préhension 6. Ainsi, de manière avantageuse, lorsque l'organe de préhension 6 manipule le premier élément de menuiserie 2, ledit dispositif de bridage 8 est conçu pour être mobile relativement audit premier élément de menuiserie 2, de préférence au moins à translation vis-à-vis de ce dernier.

Comme illustré aux figures, le dispositif de bridage 8 forme, selon un mode particulier de réalisation, un coude, l'intérieur dudit coude étant adapté pour être rapporté contre l'extérieur d'un (des quatre) coin(s) du premier élément de menuiserie 2.

Selon l'invention, ledit poste d'engondage 1 comprend des moyens de traitement et de commande conçus pour exécuter la séquence d'opérations suivante :
- saisie du premier élément de menuiserie 2 par lesdits moyens robotisés de manipulation, pour l'immobiliser par rapport audit organe de préhension 6 ;
- mise en butée du dispositif de bridage 8 contre le premier élément de menuiserie 2, ledit dispositif de bridage 8 étant situé à une distance prédéterminée de, et/ou en butée contre, ledit premier composant de gond 4 ;
- détermination d'une première position de référence correspondant à la position dudit premier capteur de position 9 par rapport audit premier composant de gond 4,
- détection de la position dudit deuxième composant de gond 5 au moyen dudit premier capteur de position 9,
- déplacement relatif primaire desdits premier et deuxième éléments de menuiserie 2, 3 par lesdits moyens robotisés de manipulation, pour amener lesdits premier et deuxième composants de gond 4, 5 dans une position relative de coopération primaire qui est déterminée à partir à la fois de ladite première position de référence et de la position détectée dudit deuxième composant de gond 5, ladite position relative de coopération primaire permettant d'attacher lesdits premier et deuxième composants de gond 4, 5 l'un à l'autre pour relier ensemble lesdits premier et deuxième éléments de menuiserie 2, 3. Un exemple de position relative de coopération primaire est illustré aux figures 12 et 21 (à droite dans cette dernière figure).

Dans le procédé d'engondage automatisé de l'invention, les moyens de traitement et de commande exécutent la séquence d'opérations mentionnées ci-avant.

Lesdits moyens de traitement et de commande (non illustrés) comprennent par exemple du matériel et des logiciels informatiques, des données numériques, des bases de données, des instructions préenregistrées, des fichiers numériques, par exemple des fichiers 3D, et plus généralement tout moyen, en particulier électronique, adapté pour donner aux différents éléments du poste d'engondage 1 les instructions nécessaires à la réalisation de la séquence d'opérations mentionnée ci-avant (et des autres opérations et sous-opérations mentionnées ci-après). Ladite séquence d'opérations n'est pas obligatoirement formée d'une succession stricte des opérations mentionnées ci-avant, certaines opérations pouvant éventuellement, comme on le verra plus tard, être décomposées en plusieurs sous-opérations dont certaines se produisent avant une opération mentionnée préalablement, ou après une opération mentionnée postérieurement.

Préalablement à la séquence d'opérations mentionnée ci-avant, le premier composant de gond 4 est de préférence déjà attaché audit premier élément de menuiserie 2, tandis que ledit deuxième composant de gond 5 est avantageusement déjà attaché audit deuxième élément de menuiserie 3. Ainsi, de manière avantageuse, les premier et deuxième éléments de menuiserie 2, 3 sont pourvus respectivement des premier et deuxième composants de gond 4, 5 avant la réalisation de ladite séquence.

Avantageusement, l'organe de préhension 6 est conçu pour se solidariser de manière réversible audit premier élément de menuiserie 2, lors de l'opération de saisie du premier élément de menuiserie 2 par les moyens robotisés de manipulation. L'organe de préhension 6 est ainsi, après cette dernière opération, relié de manière temporaire (et contrôlée via lesdits moyens de traitement et de commande) au premier élément de menuiserie 2 via une liaison sans degré de liberté. De manière préférentielle, lors de ladite opération de saisie du premier élément de menuiserie 2 par lesdits moyens robotisés de manipulation, ledit premier élément de menuiserie 2 est embarqué (et notamment soulevé) par lesdits moyens robotisés de manipulation, et plus précisément par ledit bras de robot 7, au bout duquel se trouve préférentiellement l'organe de préhension 6 rattaché de manière réversible au premier élément de menuiserie 2.

De manière avantageuse, l'opération de mise en butée du dispositif de bridage 8 contre le premier élément de menuiserie 2 est réalisée après l'opération de saisie du premier élément de menuiserie 2 par lesdits moyens robotisés de manipulation. Dans les modes de réalisation particuliers illustrés aux figures, l'opération de mise en butée du dispositif de bridage 8 contre le premier élément de menuiserie 2 comprend également une mise en butée du dispositif de bridage 8 contre ledit premier composant de gond 4,

interdisant avantageusement tout déplacement involontaire de ce dernier (et éventuellement du premier élément de menuiserie 2) pendant l'engondage. Ceci est particulièrement utile lorsque les premier et deuxième éléments de menuiserie 2, 3 sont destinés à former un ouvrant de type oscillo-battant, comme illustré dans la majorité des figures à l'exception des figures 17 à 19. En effet, comme cela sera décrit plus en détail ci-après dans les systèmes d'ouverture oscillo-battante (et éventuellement d'autres systèmes), le premier composant de gond 4 comprend souvent une partie mobile, par exemple un bras de compas 13 lorsque le premier composant de gond 4 est un compas d'entrebâillement. Cette partie mobile peut ainsi être bloquée en position par le dispositif de bridage 8 lors de ladite opération de butée, où le dispositif de bridage 8 entre donc en butée à la fois contre ledit premier élément de menuiserie 2 et contre ledit composant de gond 4. Dans le cas d'autres types d'ouvertures formées par les premier et deuxième éléments de menuiserie 2, 3, comme aux figures 17 à 19 où ils sont conçus pour former un ouvrant à la française (ou alternativement, à l'anglaise), il n'est pas toujours obligatoire que, lors de l'opération de mise en butée, le dispositif de bridage 8 vienne en butée contre le premier composant de gond 4. Le dispositif de bridage 8 peut simplement venir en butée contre le premier élément de menuiserie 2, comme à la figure 9 par exemple, mais en restant à distance dudit premier composant de gond 3 (une telle distance n'est pas visible aux figures 17 à 19, mais elle est possible). Dans tous les cas, après l'opération de mise en butée du dispositif de bridage 8 contre le premier élément de menuiserie 2, ledit dispositif de bridage 8 est ainsi avantageusement situé à une distance prédéterminée (qui peut donc être nulle) dudit premier composant de gond 4. Ceci permet de connaitre la position relative du premier élément de menuiserie 2 par rapport au premier capteur de position 9, lors de l'étape de détermination de la première position de référence, puisque la position du premier capteur de position 9 relativement au dispositif de bridage 8 est préférentiellement elle aussi connue, ledit premier capteur de position 9 étant embarqué par le dispositif de bridage 8. L'opération de détection de la position dudit deuxième composant de gond 5 permet ensuite de connaître la position relative de ce dernier vis-à-vis du premier composant de gond 4.

Ledit dispositif de bridage 8 est de préférence monté à coulissement relativement audit organe de préhension 6 selon au moins une première direction. Plus préférentiellement, ledit dispositif de bridage 8 est en outre monté à coulissement relativement audit organe de préhension 6 selon au moins une deuxième direction, laquelle est de préférence distincte de ladite première direction. Ladite deuxième direction est avantageusement sensiblement perpendiculaire à ladite première direction. Par exemple, les première et deuxième directions sont respectivement horizontale et verticale, ou inversement.

Le dispositif de bridage 8 est ainsi avantageusement monté à coulissement relativement audit organe de préhension 6 selon au moins la première direction pour que, lors de l'opération de mise en butée du dispositif de bridage 8 contre le premier élément de menuiserie 2, le dispositif de bridage 8 se déplace selon ladite première direction jusqu'à venir se plaquer contre une première face dudit premier élément de menuiserie 2. Ledit dispositif de bridage 8 est, plus préférentiellement encore, monté à coulissement relativement audit organe de préhension 6 selon au moins la deuxième direction (en plus de la première direction), pour que, lors de l'opération de mise en butée du dispositif de bridage 8 contre le premier élément de menuiserie 2, le dispositif de bridage 8 se déplace selon ladite deuxième direction jusqu'à venir se plaquer contre une deuxième face dudit premier élément de menuiserie 2. De préférence, comme illustré aux figures, ladite deuxième face est sensiblement perpendiculaire à ladite première face. Par exemple, les première et deuxième faces s'étendent respectivement sensiblement à horizontale et à la verticale, ou inversement.

Selon un mode de réalisation particulier, illustré notamment aux figures 3, 7, 8, 9, 11 à 16 et 20 à 23, lorsque le dispositif de bridage 8 est plaqué contre ladite première face dudit premier élément de menuiserie 2, le dispositif de bridage 8 est conçu pour venir en butée contre le premier composant de gond 4, supprimant ainsi au moins un premier degré de liberté à ce dernier (relativement au premier élément de menuiserie 2, auquel est avantageusement attaché le premier composant de gond 4). De manière avantageuse, lorsque le dispositif de bridage 8 est plaqué contre ladite deuxième face dudit premier élément de menuiserie 2, le dispositif de bridage 8 est conçu pour venir en butée contre le premier composant de gond 4, supprimant ainsi au moins un deuxième degré de liberté à ce dernier. En d'autres termes, dans certains modes de réalisation particulier (par exemple dans le cas d'un système d'ouverture oscillo-battante), après ladite opération de saisie et pendant ladite opération de mise en butée, le dispositif de bridage 8 est peut être avantageusement conçu pour se déplacer, relativement à la fois à l'organe de préhension 6, au premier élément de menuiserie 2 et au premier composant de gond 4, selon la première direction afin de plaquer ledit premier composant de gond 4 contre le premier élément de menuiserie 2, bloquant de manière efficace tout mouvement du premier composant de gond 4 selon la première direction. Avantageusement dans ces modes de réalisations particuliers susmentionnés, après ladite opération de saisie et pendant ladite opération de mise en butée, le dispositif de bridage 8 est en outre avantageusement conçu pour se déplacer, relativement à la fois à l'organe de préhension 6, au premier élément de menuiserie 2 et au premier composant de gond 4, selon la deuxième direction afin de plaquer ledit premier composant de gond 4 contre le premier élément de menuiserie 2, bloquant de manière efficace tout mouvement du premier composant de gond 4 selon la deuxième direction. Bien évidemment, le deuxième degré de liberté est différent du premier. L'opération de mise en butée peut éventuellement, notamment dans les cas particuliers susmentionnés, se décomposer en au moins deux sous-opérations suivantes :
- déplacement du dispositif de bridage 8, relativement audit organe de préhension 6, selon la première direction, jusqu'à ce qu'il rentre en contact avec (la première face du premier élément de menuiserie 2 et) une partie du premier composant de gond 4 et supprime un premier degré de liberté à ce dernier (relativement à l'organe de préhension 6 et/ou au premier élément de menuiserie 2),
- déplacement du dispositif de bridage 8, relativement audit organe de préhension 6, selon la deuxième direction, jusqu'à ce qu'il rentre en contact avec (la deuxième face du premier élément de menuiserie 2 et) une autre partie du premier composant de gond 4 et supprime un deuxième degré de liberté à ce dernier (relativement à l'organe de préhension 6 et/ou au premier élément de menuiserie 2).

Avantageusement, à la fin de l'opération de mise en butée, le premier composant de gond 4 ne peut plus bouger relativement au premier élément de menuiserie 2 grâce au blocage mécanique réalisé par le dispositif de bridage 8, et ainsi, la première position de référence dudit premier capteur de position 9 par rapport audit premier composant de gond 4 est connue et stable. Ceci permet, comme on le verra ci-après, au poste d'engondage 1 de réaliser un positionnement particulièrement précis des premier et deuxième composants de gond 4, 5 relativement l'un à l'autre.

Par ailleurs, à la fin de l'opération de mise en butée, le premier capteur de position 9, embarqué par le dispositif de bridage 8, se trouve avantageusement dans la première position de référence (relativement à l'organe de préhension 6 notamment), située de préférence au voisinage immédiat du premier composant de gond 4, comme illustré aux figures. La première position de référence est avantageusement prédéterminée, par exemple à l'aide de tests préalables. Ainsi, la première position de référence correspond à la position du premier capteur de position 9 lorsque le dispositif de bridage 8 est en butée contre le premier élément de menuiserie 2 comme mentionné ci-avant, mais du fait que ladite première position de référence soit prédéterminée, il est avantageusement possible d'en déduire, par les moyens de traitement et de commande, la position réelle du premier composant de gond 4 (puisque la position de ce dernier relativement au premier élément de menuiserie 2 est avantageusement préalablement connue). A tout le moins, grâce à la détection de la première position de référence, les moyens de traitement et de commande peuvent en déduire la position réelle du premier composant de gond 4 par rapport au reste du poste d'engondage 1. Après la mise en butée, le premier capteur de position 9 se trouve idéalement seulement à quelques centimètres, par exemple moins 10 cm, de préférence moins de 5 cm, du premier composant de gond 4.

Préférentiellement, l'opération de détermination de la première position de référence suit l'opération de mise en butée, et est suivie par l'opération de détection de la position du deuxième composant de gond 5 au moyen dudit premier capteur de position 9. Le premier capteur de position 9 comprend avantageusement un capteur optique, lequel permet en particulier de réaliser l'opération de détection. Les moyens de traitement et de commande sont donc conçus pour amener à se déplacer, de préférence à l'aide des moyens robotisés (et plus précisément au moyen du bras de robot 7), le premier capteur de position 9, embarqué par le dispositif de bridage 8 lui-même embarqué par l'organe de préhension 6, jusqu'à ce que ledit premier capteur de position 9 (et plus particulièrement son capteur optique), passe devant le deuxième composant de gond 5 et détecte ainsi sa position. Le premier capteur de position 9 peut être conçu pour repérer une forme et/ou un relief particulier que présente le deuxième composant de gond 5 à la surface du deuxième élément de menuiserie 3. Le premier capteur de position 9 présente ainsi avantageusement deux fonctions : déterminer sa propre (première) position de référence lorsque le dispositif de bridage 8 est en butée contre le premier élément de menuiserie 2 (et éventuellement contre le premier composant de gond 4), ce qui permet d'en déduire la position réelle du premier composant de gond 4, puis détecter la position du deuxième composant de gond 5 notamment à l'aide de son capteur optique.

Enfin, lors de l'opération de déplacement relatif primaire desdits premier et deuxième éléments de menuiserie 2, 3 par lesdits moyens robotisés de manipulation, les moyens de traitement et de commande sont avantageusement conçus pour commander lesdits moyens robotisés de manipulation à amener lesdits premier et deuxième composants de gond 4, 5 dans ladite position relative de coopération primaire. Dans cette dernière, les premier et deuxième composants de gond 4, 5 sont préférentiellement placés l'un relativement à l'autre pour être prêt à être attachés ensemble, de préférence en étant montés mobile à rotation l'un par rapport à l'autre, notamment au cours d'une opération postérieure, dans laquelle un axe de liaison 12 vient s'insérer dans les premier et deuxième composants de gond 4, 5 pour les relier ensemble, comme on le verra plus tard. Ceci permet, comme indiqué, de relier ensemble lesdits premier et deuxième éléments de menuiserie 2, 3, de préférence de manière mobile à rotation l'un relativement à l'autre. L'opération de déplacement relatif primaire desdits premier et deuxième éléments de menuiserie 2, 3 est selon une variante au moins en partie concomitante avec une ou plusieurs des autres opérations mentionnées précédemment. Ainsi, en pratique, entre l'opération de saisie et l'opération de détection, les moyens robotisés de manipulation ont avantageusement déplacés lesdits premier et deuxième éléments de menuiserie 2, 3 l'un par rapport à l'autre afin les rapprocher l'un de l'autre, et plus précisément les positionner l'un relativement à l'autre de sortie que le premier capteur de position 9 puisse détecter la position du deuxième composant de gond 5. Les moyens de traitement et de commande sont, de manière avantageuse, conçus pour commander ledit déplacement relatif primaire desdits premier et deuxième éléments de menuiserie 2, 3 par lesdits moyens robotisés de manipulation à l'aide d'au moins :
- ladite première position de référence, laquelle correspond sensiblement en pratique à la position du premier capteur de position 9, en particulier par rapport audit premier composant de gond 4,
- éventuellement, la position réelle du premier composant de gond 4, déterminée à partir de ladite première position de référence, et optionnellement à partir de données préenregistrées concernant l'écart entre le premier capteur de position 9 et le premier composant de gond 4 à la fin de l'opération de mise en butée (du dispositif de bridage 8 contre le premier élément de menuiserie 2),
- ladite position détectée, par le premier capteur de position 9 (et plus particulièrement pas le capteur optique de ce dernier), du deuxième composant de gond 5.

Lorsque le premier capteur de position 9 passe devant le deuxième composant de gond 5 (ou un relief particulier de ce dernier), il est avantageusement conçu pour envoyer un signal associé aux moyens de traitement et de commande, lesquels amènent alors les moyens robotisés, et plus particulièrement le bras de robot 7, à déplacer ledit premier élément de menuiserie 2 relativement audit deuxième élément de menuiserie 3, pour rapprocher les premier et deuxième éléments de menuiserie 2, 3 l'un de l'autre suffisamment pour mettre en correspondance les premier et deuxième composants de gond 4, 5 l'un avec l'autre, afin qu'ils puissent ensuite être attachés ensemble par exemple lors d'une opération finale d'engondage ultérieure.

Selon une variante de réalisation, illustrée aux figures et notamment visible aux figures 1, 11, et 13 à 19, l'un desdits premier et deuxième composants de gond 4, 5 est conçu pour recevoir en son sein l'autre desdits premier et deuxième composants de gond 4, 5. Selon un mode de réalisation particulier, lesdits premier et deuxième composants de gond 4, 5 comprennent respectivement un palier ouvrant 10 et un palier dormant 11. Selon une première variante, comme illustré aux figures, ledit palier dormant 11 est conçu pour accueillir en son sein ledit palier ouvrant 10 dans ladite position relative de coopération primaire. Alternativement, l'inverse est possible, c'est-à-dire que ledit palier ouvrant 10 est conçu pour accueillir en son sein ledit palier dormant 11 dans ladite position relative de coopération primaire.

Selon un mode de réalisation particulier, dont une variante est illustrée aux figures 1 à 3 7 à 9, 11 à 16, et 20 à 23, lesdits premier et deuxième éléments de menuiserie 2, 3 sont destinés à former, une fois engondés l'un à l'autre, un assemblage de menuiserie à soufflet ou oscillo-battant, par exemple une fenêtre à soufflet, un vantail, une fenêtre ou une porte-fenêtre oscillo-battante. Le poste d'engondage 1 et le procédé d'engondage de l'invention sont particulièrement utiles pour engonder des ouvrants aux dormants de ce type d'ouverture de menuiserie, bien qu'ils ne soient pas limités à cette application, qui est particulièrement complexe et difficile à automatiser. Selon un autre mode de réalisation particulier, dont une variante est illustrée aux figures 17 à 19, lesdits premier et deuxième éléments de menuiserie 2, 3 sont destinés à former, une fois engondés l'un à l'autre, un assemblage de menuiserie à la française (ou alternativement, à l'anglaise), c'est-à-dire une ouverture qui s'ouvre vers l'intérieur (ou alternativement, à l'extérieur) du bâtiment et d'une seule manière (notamment par rotation selon un axe vertical), contrairement aux ouvrants oscillo-battants. Le poste d'engondage 1 de l'invention est ainsi avantageusement conçu pour engonder de manière efficace, précise, répétable, rapide et automatisée, différents types de systèmes de menuiserie. De manière avantageuse, pendant ladite opération de détection de la position dudit deuxième composant de gond 5, les moyens de traitement et de commande sont conçus pour amener lesdits moyens robotisés de manipulation à déplacer le premier élément de menuiserie 2 relativement audit deuxième élément de menuiserie 3 au voisinage, et de préférence le long, de ce dernier, pour que le premier capteur de position 9 effectue au moins une opération de balayage du deuxième composant de gond 5. Ladite opération de balayage du deuxième composant de gond 5 comprend de préférence au moins un balayage primaire selon une direction primaire, de préférence verticale, du deuxième composant de gond 5 par le premier capteur de position 9, pour détecter des données primaires de positionnement, de préférence de positionnement vertical, dudit deuxième composant de gond 5 relativement au premier composant de gond 4. Un tel balayage primaire est illustré notamment à la figure 17, où les moyens robotisés de manipulation (en l'occurrence le robot six axes) mettent en translation verticale vers le bas le premier capteur de position 9 et le premier élément de menuiserie 2, lequel avait préalablement été immobilisé relativement à, et embarqué par, l'organe de préhension 6. Le premier capteur de position 9 peut donc balayer le deuxième composant de gond 5 pour détecter une donnée particulière de ce dernier, par exemple une donnée indiquant l'altitude d'un relief dudit deuxième composant de gond 5. Ainsi, de manière avantageuse, lesdites données primaires de positionnement dudit deuxième composant de gond 5 comprennent au moins :
- une donnée de position d'une extrémité du deuxième composant de gond 5, de préférence une donnée primaire d'altitude, et/ou
- une donnée de position d'une différence de relief à la surface dudit deuxième composant de gond 5, de préférence une donnée secondaire d'altitude.

La donnée de position d'une extrémité indique par exemple l'altitude de l'extrémité haute du deuxième composant de gond 5, par exemple celle du palier dormant 11. La donnée de position d'une différence de relief indique par exemple l'altitude la plus haute de l'intérieur du palier dormant 11 formant le deuxième composant de gond 5, c'est-à-dire en pratique la limite entre une partie en relief supérieure du palier dormant 11, et une partie creuse de ce dernier, ladite partie creuse étant destinée à recevoir le palier ouvrant 10. Ceci permet un positionnement très précis du premier composant de gond 4 relativement au deuxième composant de gond 5 par le poste d'engondage 1, en particulier dans le plan vertical.

Les figures 17 à 19 concerne un mode de réalisation particulier, où les premier et deuxième éléments de menuiserie 2, 3 sont destinés à former une ouverture à la française (ou à l'anglaise), mais bien évidemment les opérations illustrées dans ces figures s'appliquent également aux autres types de menuiserie, notamment aux ouvertures oscillo-battantes. Il est à noter qu'aux figures, en particulier aux figures 17, 18 et 19, on a :
- la flèche F qui indique un mouvement (translation verticale vers le bas) de l'ensemble formé par l'organe de préhension 6, le dispositif de bridage 8 (pas illustrés sur ces figures pour des raisons de compréhension), le premier élément de menuiserie 2, les premier et deuxième composants de gond 4, 5, et les premier et second capteurs de position 9, 23 ;
- la flèche G qui indique sensiblement le mouvement de balayage du premier ou du deuxième capteur de position 9, 23, qui est en pratique le même mouvement que celui indiqué par la flèche F ;
- la ou les flèches P qui indiquent de manière schématique une direction ou un champ de balayage du premier ou du deuxième capteur de position 9, 23, tourné vers le deuxième ou le quatrième composant de gond 5, 15.

Selon un mode de réalisation particulier, ladite opération de balayage du deuxième composant de gond 5 comprend au moins un balayage secondaire selon une direction secondaire, de préférence horizontale, du deuxième composant de gond 5 par le premier capteur de position 9, pour détecter des données secondaires de positionnement, de préférence de positionnement horizontal, dudit deuxième composant de gond 5 relativement au premier composant de gond 4. Un tel balayage secondaire est illustré notamment à la figure 18, où les moyens robotisés de manipulation (en l'occurrence le robot six axes) mettent en translation horizontale vers le côté le premier capteur de position 9 et le premier élément de menuiserie 2, lequel avait préalablement été immobilisé relativement à, et embarqué par, l'organe de préhension 6 (le premier capteur de position 9 et le premier élément de menuiserie 2 sont donc immobilisés l'un par rapport à l'autre, via le dispositif de bridage 8). Ceci permet de connaître précisément la position dans le plan horizontal du deuxième composant de gond 5 relativement au premier composant de gond 4.

De manière connue en tant que telle, lesdits premier et deuxième éléments de menuiserie 2, 3 sont avantageusement également pourvus respectivement de troisième et quatrième composants de gond 14, 15. Lesdits troisième et quatrième composants de gond 14, 15 peuvent être sensiblement similaires auxdits premier et deuxième composants de gond 4, 5, comme illustré aux figures 17 à 19, ou très différents d'eux, comme illustré aux autres figures.

Selon une variante particulière de l'invention, ledit poste d'engondage 1 comprend en outre un second capteur de position 23 embarqué par ledit organe de préhension 6. De manière préférentielle, lesdits moyens de traitement et de commande sont alors également conçus pour exécuter la séquence d'opérations suivante :
- mise en référence du premier élément de menuiserie 2 par mise en butée de ce dernier contre ledit organe de préhension 6, par exemple par gravité, au voisinage du troisième composant de gond 4, ladite mise en butée étant ainsi réalisée à une distance prédéterminée de ce dernier,
- détermination d'une seconde position de référence correspondant à la position dudit second capteur de position 23 par rapport audit troisième composant de gond 14,
- détection de la position dudit quatrième composant de gond 15 au moyen dudit second capteur de position 23,
- déplacement relatif secondaire desdits premier et deuxième éléments de menuiserie 2, 3 par lesdits moyens robotisés de manipulation, pour amener lesdits troisième et quatrième composants de gond 14, 15 dans une position relative de coopération secondaire qui est déterminée à partir à la fois de ladite seconde position de référence et de la position détectée dudit quatrième composant de gond 5, ladite position relative de coopération secondaire permettant d'attacher lesdits troisième et quatrième composants de gond 14, 15 l'un à l'autre pour relier ensemble lesdits premier et deuxième éléments de menuiserie 2, 3.

De manière avantageuse, pendant ladite opération de détection de la position dudit quatrième composant de gond 15, les moyens de traitement et de commande sont conçus pour amener lesdits moyens robotisés de manipulation à déplacer le premier élément de menuiserie 2 relativement audit deuxième élément de menuiserie 3 au voisinage, et de préférence le long, de ce dernier, pour que le second capteur de position 23 effectue au moins une opération de balayage du quatrième composant de gond 15. Selon un mode de réalisation particulier, ladite opération de balayage du quatrième composant de gond 15 comprend au moins un balayage tertiaire selon une direction tertiaire, de préférence horizontale (alternativement horizontale), du quatrième composant de gond 15 par le second capteur de position 23, pour détecter des données tertiaires de positionnement, de préférence de positionnement horizontal, dudit quatrième composant de gond 15 relativement au troisième composant de gond 14. Un tel balayage tertiaire est illustré notamment à la figure 19, où les moyens robotisés de manipulation (en l'occurrence le robot six axes) mettent en translation horizontale vers le côté le second capteur de position 23 et le premier élément de menuiserie 2, lequel avait préalablement été immobilisé relativement à, et embarqué par, l'organe de préhension 6 (le second capteur de position 23 et le premier élément de menuiserie 2 sont donc immobilisés l'un par rapport à l'autre, via le dispositif de bridage 8). Ceci permet de connaître précisément la position dans le plan horizontal du quatrième composant de gond 15 relativement au troisième composant de gond 14.

De manière avantageuse, l'un ou chacun desdits premier capteur de position 9 et second capteur de position 23 comprend un capteur laser respectif. Ce dernier est par exemple un capteur laser à couleur verte, émettant en particulier dans une longueur d'onde de (environ) 505 nm (+/-20 nm). Bien évidemment, lesdits premier et second capteur 9, 23, comme le reste du poste d'engondage 1, sont de préférence alimentés électriquement. L'un ou chacun desdits premier capteur de position 9 et second capteur de position 23 est de préférence conçu pour pouvoir détecter un objet à une distance comprise entre 10 et 80 mm, de préférence comprise entre 15 et 70 mm, plus préférentiellement comprise entre 20 et 60 mm, plus préférentiellement encore comprise entre 25 et 50 mm. L'un ou chacun desdits premier capteur de position 9 et second capteur de position 23 présente avantageusement une masse comprise entre 10 et 100 grammes, de préférence comprise entre 20 et 60 grammes, plus préférentiellement comprise entre 25 et 50 grammes, par exemple environ égale à 35 g. L'un ou chacun desdits premier capteur de position 9 et second capteur de position 23 présente par exemple des largeur, longueur et épaisseur qui sont toutes de l'ordre de quelques cm ou quelques mm, par exemple qui sont respectivement inférieures à 4 cm, 5 cm, et 2 cm. La masse et les dimensions limitées du premier capteur de position 9 et/ou du second capteur de position 23 leur permettent notamment d'être embarqué(s) facilement par le dispositif de bridage 8 et/ou par l'organe de préhension 6.

Dans un mode de réalisation particulier, notamment celui concernant les ouvertures oscillo-battantes, l'un desdits premier et deuxième composants de gond 4, 5 est avantageusement formé par un compas d'entrebâillement, lequel comprend au moins :
- un palier ouvrant 10, lequel est avantageusement destiné à être relié à rotation à l'autre desdits premier et deuxième composants de gond 4, 5,
- un bras de compas 13 solidaire dudit palier ouvrant 10, ledit bras de compas 13 étant d'une part, (directement) relié à rotation à l'un desdits premier et deuxième éléments de menuiserie 2, 3, et d'autre part, par l'intermédiaire dudit palier ouvrant 10, destiné à être relié à rotation à l'autre desdits premier et deuxième éléments de menuiserie 2, 3.

Un tel compas d'entrebâillement est notamment visible aux figures 1, 3, 8, 9, 11, 14 à 16 et 20 à 23. Le premier composant de gond 4 forme alors un compas d'entrebâillement tel que mentionné ci-avant, tandis que le bras de compas 13 est initialement (c'est-à-dire avant la séquence d'opérations mentionnée précédemment) déjà relié à rotation audit premier élément de menuiserie 2 via une première extrémité, tandis qu'une deuxième extrémité dudit bras de compas 13 est reliée au palier ouvrant 10, lequel est donc destiné à être relié au deuxième élément de menuiserie 3 via le deuxième composant de gond 5.

Les assemblages de menuiserie à soufflet ou oscillo-battant sont particulièrement difficiles à réaliser de manière automatisée du fait de leurs ferrures particulières. Comme c'est le cas dans les modes de réalisation des figures susmentionnées, les troisième et quatrième composants de gond 14, 15 forment ou comprennent respectivement un palier d'oscillation 14 et un axe d'oscillation 15, ou inversement. Ledit axe d'oscillation 15 est de préférence monté à rotation (par exemple à l'aide d'une rotule) relativement audit premier et deuxième éléments de menuiserie 2, 3 auquel il est rattaché. L'axe d'oscillation 15 est bien entendu avantageusement conçu pour être introduit dans le palier d'oscillation 14, notamment en partie basse des premier et deuxième éléments de menuiserie 2, 3. Le compas d'entrebâillement, lorsqu'il est présent, est souvent en partie haute des premier et deuxième éléments de menuiserie 2, 3. L'inverse est bien évidemment possible (compas d'entrebâillement en partie basse, voire même sur le côté, et axe d'oscillation 15/palier d'oscillation 14 en partie haute).

De préférence, et de manière connue en tant que telle, lesdits premier et deuxième éléments de menuiserie 2, 3 comprennent respectivement des première et deuxième portions locales 16, 17 sensiblement allongées, comme illustrée aux figures où lesdits premier et deuxième éléments de menuiserie 2, 3 sont visibles. Lesdites première et deuxième portions locales 16, 17 sont avantageusement destinées à s'étendre sensiblement le long l'une de l'autre, et de préférence sensiblement parallèlement l'une à l'autre, lorsque lesdits premier et deuxième éléments de menuiserie 2, 3 ont été engondés ensemble, comme illustré aux figures 1 et 22, ce qui correspond avantageusement à une position finale d'engondage. Lesdites première et deuxième portions locales 16, 17 sont de préférence formées respectivement par des premier et deuxième longerons 16, 17 appartenant respectivement auxdits premier et deuxième éléments de menuiserie 2, 3. Comme mentionné précédemment, chacun desdits premier et deuxième éléments de menuiserie 2, 3 comprend avantageusement quatre longerons respectifs (qui forment par exemple un cadre), le premier longeron 16 formant l'un des quatre longerons du premier élément de menuiserie 2, tandis que ledit deuxième longeron 17 forme l'un des quatre longerons du deuxième élément de menuiserie 3. Avantageusement, lorsque lesdits premier et deuxième éléments de menuiserie 2, 3 sont engondés ensemble, et que l'ouvrant est positionné contre le dormant (en position fermée donc), chacun des longerons du premier élément de menuiserie 2 se trouve contre et le long d'un des longerons correspondants du deuxième élément de menuiserie 3. Les premier et deuxième longerons 16, 17 sont alors préférentiellement contre et le long l'un de l'autre. De manière avantageuse, lorsque lesdits premier et deuxième éléments de menuiserie 2, 3 sont engondés ensemble, et que l'ouvrant est positionné vis-à-vis du dormant de façon à former une ouverture (l'ouvrant étant donc en position ouverte), les premier et deuxième longerons 16, 17 sont alors préférentiellement encore le long l'un de l'autre, de préférence au voisinage l'un de l'autre, alors que certains des autres longerons du premier élément de menuiserie 2 peuvent être à l'écart des autres longerons du deuxième élément de menuiserie 3. Lorsque lesdits premier et deuxième éléments de menuiserie 2, 3 sont engondés ensemble, lesdits premier et deuxième longerons 16, 17 sont avantageusement sensiblement parallèles l'un à l'autre.

Une variante d'engondage des premier et deuxième éléments de menuiserie 2, 3, par le poste d'engondage 1 de l'invention, est illustrée aux figures 20 à 22, qui présentent des étapes successives d'engondage d'un premier jeu de ferrures (puis d'un deuxième jeu de ferrures. En substance, dans le cas particulier exposé ici, qui est de préférence non limitatif, le premier jeu de ferrures comprend les troisième et quatrième composants de gond 14, 15, plus précisément le palier d'oscillation 14 et l'axe d'oscillation 15 respectivement, tandis que le deuxième jeu de ferrures comprend lesdits premier et deuxième composants de gond 4, 5. La figure 23 illustre un mode de réalisation particulier du poste d'engondage 1, qui est sensiblement similaire au poste engondage 1 illustré aux figures 2 à 12, et où les étapes des figures 14 à 16 sont reprises de manière condensée. Ainsi, dans la figure 23 :
- l'étape de gauche correspond à la position relative des premier et deuxième éléments de menuiserie 2, 3, comme à gauche de la figure 20, où les premier et deuxième longerons 16, 17 sont avantageusement sensiblement parallèles l'un à l'autre,
- l'étape du milieu correspond à la position relative des premier et deuxième éléments de menuiserie 2, 3, comme à la figure 21 au milieu, l'axe d'oscillation 15 étant inséré dans le palier d'oscillation 14, les premier et deuxième longerons 16, 17 étant avantageusement sensiblement encore un peu à l'oblique l'un par rapport à l'autre, le palier ouvrant 10 étant prêt à être logé dans le palier dormant 11 par rotation du premier élément de menuiserie 2 par rapport au deuxième élément de menuiserie 3,
- l'étape de droite correspond à une position finale d'engondage, comme à la figure 22, l'axe d'oscillation 15 étant inséré dans le palier d'oscillation 14 et relié à ce dernier, les premier et deuxième éléments de menuiserie 2, 3 étant engondés ensemble.

Selon une variante particulière de l'invention, ladite opération de déplacement relatif primaire desdits premier et deuxième éléments de menuiserie 2, 3 par lesdits moyens robotisés de manipulation comprend au moins la séquence de sous-opérations suivante (laquelle concerne principalement le deuxième jeu de ferrures) :
- positionnement préalable desdits premier et deuxième éléments de menuiserie 2, 3 l'un par rapport à l'autre par lesdits moyens robotisés de manipulation, pour amener d'une part lesdits premier et deuxième composants de gond 4, 5 sensiblement en regard et au voisinage l'un de l'autre et d'autre part ladite première portion locale 16 sensiblement le long de ladite deuxième portion locale 17, comme illustré notamment à la figure 21 à gauche,
- mise en mouvement par translation dudit premier élément de menuiserie 2 par ledit organe de préhension 6, pour faire évoluer (de préférence vers le bas) ladite première portion locale 16 le long de ladite deuxième portion locale 17, jusqu'à ce que se produise ladite opération de détection de la position dudit deuxième composant de gond 5 au moyen dudit premier capteur de position 9 ; des variantes de cette dernière sous-opération sont notamment illustrées aux figures 17 et 18 ainsi qu'à la figure 21 (à gauche puis au milieu) ;
- après ladite opération de détection, mise en mouvement par rotation dudit premier élément de menuiserie 2 par ledit organe de préhension 6, pour faire évoluer ladite première portion locale 16 par rapport à ladite deuxième portion locale 17, en rapprochant lesdits premier et deuxième composants de gond 4, 5 jusqu'à ce qu'ils soient dans ladite position relative de coopération primaire; une variante de cette dernière sous-opération est notamment illustrée à la figure 21 (au milieu puis à droite).

Optionnellement, mais de manière avantageuse dans le cas particulier où lesdits premier et deuxième éléments de menuiserie 2, 3 sont destinés à former un assemblage de menuiserie à soufflet ou oscillo-battant, et de préférence préalablement à la sous-opération de positionnement préalable mentionnée ci-avant et à l'engondage du deuxième jeu de ferrures, plus précisément des premier et deuxième composants de gond 4, 5, les moyens de traitement et de commande sont en outre conçus pour réaliser la solidarisation du troisième composant de gond 14 équipant le premier élément de menuiserie 2 avec le quatrième composant de gond 15 équipant le deuxième élément de menuiserie 3. Ledit troisième composant de gond 14 est par exemple formé par le palier d'oscillation 14 (de préférence celui mentionné ci-avant), tandis que le quatrième composant de gond 15 est formée par l'axe d'oscillation 15 (de préférence celui mentionné ci-avant). Les moyens de traitement et de commande sont alors conçus pour réaliser la solidarisation du palier d'oscillation 14 avec l'axe d'oscillation 15. Plus précisément, de préférence préalablement à l'engondage des premier et deuxième composants de gond 4, 5 ensemble, les moyens de traitement et de commande sont conçus pour engonder ensemble le palier d'oscillation 14 avec l'axe d'oscillation 15, en faisant pénétrer l'axe d'oscillation 15 dans le palier d'oscillation 14. Pour réaliser cela, les moyens de traitement et de commande peuvent par exemple être en outre conçus pour exécuter la séquence d'opérations suivante :
- rapprochement relatif desdits premier et deuxième éléments de menuiserie 2, 3 l'un par rapport à l'autre par lesdits moyens robotisés de manipulation, pour amener ladite première portion locale 16 sensiblement au voisinage, et de préférence en regard, de ladite deuxième portion locale 17, comme illustré notamment à la figure 20 (à gauche),
- rotation, dans un premier sens (ici antihoraire), du premier élément de menuiserie 2 embarquant ledit troisième composant de gond 14 (ici le palier d'oscillation 14) pour mettre en correspondance cette dernière avec ledit quatrième composant de gond 15 (ici l'axe d'oscillation 15), comme illustré notamment à la figure 20 (à gauche puis au milieu),
- translation, par exemple vers le bas, du premier élément de menuiserie 2 de façon à solidariser (au moins en partie) ledit troisième composant de gond 14 avec ledit quatrième composant de gond 15, comme illustré notamment à la figure 20 (au milieu puis à droite) ; de manière préférentielle, l'axe d'oscillation 15 est alors inséré, en partie seulement, au sein dudit palier d'oscillation 14 ;
- rotation, dans un second sens (ici horaire) opposé au premier sens, du premier élément de menuiserie 2, comme illustré notamment à la figure 20 (à droite) puis à la figure 21 (à gauche); l'axe d'oscillation 15, alors inséré partiellement dans le palier d'oscillation 14, autorise cette rotation, laquelle permet en outre avantageusement d'une part d'amener lesdits premier et deuxième composants de gond 4, 5 sensiblement en regard et au voisinage l'un de l'autre et d'autre part d'amener ladite première portion locale 16 sensiblement le long de ladite deuxième portion locale 17. Cette dernière opération peut ainsi être concomitante à ou constituer la sous-opération de positionnement préalable desdits premier et deuxième éléments de menuiserie 2, 3 mentionnée ci-avant.

**Il** est à noter que la sous-opération de mise en mouvement par translation dudit premier élément de menuiserie 2 par ledit organe de préhension 6, permet donc de manière avantageuse de faire évoluer par translation vers le bas le premier élément de menuiserie 2 relativement au deuxième élément de menuiserie 3. Ceci entraîne alors avantageusement une insertion d'une plus grande partie, voire de la totalité, de l'axe d'oscillation 15 au sein du palier d'oscillation 14, jusqu'à ce que se produise ladite opération de détection de la position dudit deuxième composant de gond 5 au moyen dudit premier capteur de position 9 comme illustré à la figure 21 (à gauche puis au milieu). **Il** est également à noter que la sous-opération de mise en mouvement par rotation dudit premier élément de menuiserie 2 par ledit organe de préhension 6, permet donc de manière avantageuse de faire évoluer par rotation vers le bas le premier élément de menuiserie 2 relativement au deuxième élément de menuiserie 3, pour rapprocher les premier et deuxième composants de gond 4, 5 l'un de l'autre jusqu'à ce qu'ils soient dans ladite position relative de coopération primaire, où de préférence le palier dormant 11 accueille en son sein le palier ouvrant 10.

Selon un mode de réalisation particulier, illustré aux figures, lesdits premier et deuxième composants de gond 4, 5 comprennent respectivement des premier et deuxième évidements, pour que dans ladite position relative de coopération primaire, lesdits premier et deuxième évidements soient positionnés dans le prolongement l'un de l'autre. Le palier ouvrant 10 et le palier dormant 11 sont avantageusement pourvus respectivement des premier et deuxième évidements.

Selon une variante, l'un desdits premier et deuxième composants de gond 4, 5 (ici le deuxième composant de gond 5) comprend un axe de liaison 12 monté mobile (de préférence à translation, comme illustré aux figures 21 à droite et 22), par rapport au reste dudit composant de gond 4, 5, et notamment par rapport audit palier dormant 11. Ledit poste d'engondage 1 comprend alors éventuellement un moyen de poussoir 22, comprenant par exemple notamment un vérin, conçu pour pousser ledit axe de liaison 12, de préférence vers le haut, pour qu'il s'insère à la fois dans lesdits premier et deuxième évidements (et donc dans lesdits paliers ouvrant 10 et dormant 11), reliant ainsi à rotation lesdits premier et deuxième composants de gond 4, 5 l'un à l'autre. En d'autres termes encore, ledit poste d'engondage 1 comprend, selon une variante particulière de réalisation, un moyen de poussoir 22 (celui susmentionné) qui est avantageusement embarqué par ledit organe de préhension 6. Ledit moyen de poussoir 22 est de préférence monté à coulissement (grâce au vérin par exemple) relativement audit ledit organe de préhension 6. Ledit moyen de poussoir 22 est ainsi préférentiellement conçu pour assurer une solidarisation finale entre lesdits premier et deuxième composants de gond 4, 5 après qu'ils aient été placés en position relative de coopération primaire (et donc en pratique, lorsque le palier ouvrant 10 a été inséré dans le palier dormant 11). Bien évidemment, les moyens de traitement et de commande sont avantageusement conçus pour commander, de préférence au cours d'une opération finale d'engondage, le moyen de poussoir 22 pour pousser l'axe de liaison 12 dans lesdits premier et deuxième composants de gond 4, 5, plus précisément dans lesdits palier ouvrant 10 et palier dormant 11, et encore plus précisément dans lesdits premier et deuxième évidements, lorsque lesdits premier et deuxième composants de gond 4, 5 sont dans ladite position relative de coopération primaire.

Ledit organe de préhension 6 comprend de préférence au moins des moyens de retenue 18, 19 par exemple une pluralité de ventouses 18 et/ou de griffes 19, et comprend avantageusement en outre des moyens de butée 20 (distincts des moyens de retenue 18, 19). Les ventouses 18 permettent par exemple de solidariser l'organe de préhension 6 à une vitre ou aux longerons du premier élément de menuiserie 2, en particulier lorsqu'il constitue un ouvrant.

Selon une variante de réalisation, illustrée notamment par les figures 14 à 16, lors de l'opération de saisie du premier élément de menuiserie 2 par lesdits moyens robotisés de manipulation, ledit organe de préhension 6 est conçu pour positionner le premier élément de menuiserie 2 dans une position de mise en référence relativement à l'organe de préhension 6, celle-ci étant de préférence prédéterminée et enregistrée par les moyens de traitement et de commande.

Ladite opération de saisie du premier élément de menuiserie 2 par lesdits moyens robotisés de manipulation comprend de préférence au moins la séquence de sous-opérations suivante :
- première solidarisation du premier élément de menuiserie 2 et des moyens de retenue 18, 19, le premier élément de menuiserie 2 étant dans une position préalable de saisie relativement à l'organe de préhension 6,
- embarquement du premier élément de menuiserie 2 par ledit organe de préhension 6 ; la figure 14 illustre le résultat des opérations de première solidarisation et d'embarquement,
- basculement du premier élément de menuiserie 2 par ledit organe de préhension 6, comme illustré à la figure 15, partie gauche ; dans cette dernière position, la première portion locale 16 se trouve avantageusement à une altitude inférieure à celle du reste du premier élément de menuiserie 2,
- désolidarisation au moins partielle du premier élément de menuiserie 2 et des moyens de retenue 18, 19, pour faire glisser par gravité le premier élément de menuiserie 2 jusqu'à ce que qu'il rentre en contact avec les moyens de butée 20, comme illustré à la figure 15, partie droite ; ceci permet notamment la mise en référence du premier élément de menuiserie 2 par rapport aux moyens de butée 20, et donc par rapport à l'organe de préhension 6 (et donc fait partie de l'opération de mise en référence mentionnée ci-avant),
- deuxième solidarisation du premier élément de menuiserie 2 et des moyens de retenue 18, 19, le premier élément de menuiserie 2 étant alors dans ladite position de mise en référence relativement à l'organe de préhension 6 (figure 15, droite),
- et optionnellement, rebasculement du premier élément de menuiserie 2 par ledit organe de préhension 6 ; la figure 16 illustre le résultat des opérations de deuxième solidarisation et de rebasculement, puis de l'opération de mise en butée du dispositif de bridage 8 contre le premier composant de gond 4.

Cette configuration permet de positionner le premier élément de menuiserie 2 dans la position de mise en référence, qui est, comme mentionné, prédéterminée. Il est ainsi possible de savoir précisément où se trouve le premier élément de menuiserie 2 relativement à l'organe de préhension 6 (et donc relativement au reste du poste d'engondage 1). L'opération de mise en butée du dispositif de bridage 8 contre le premier composant de gond 4 est de préférence réalisée après ladite sous-opération de deuxième solidarisation. Le dispositif de bridage 8 peut donc être mis en butée contre le premier composant de gond 4 avec un risque d'erreur minimisé, puisque le premier élément de menuiserie 2 est dans une position prédéterminée (position de mise en référence), avantageusement préalablement enregistrée par les moyens de traitement et de commande. Après la sous-opération de deuxième solidarisation, les moyens de traitement et de commande sont de préférence conçus faire rebasculer le premier élément de menuiserie 2 afin d'exécuter ladite opération de rapprochement relatif desdits premier et deuxième éléments de menuiserie 2, 3 l'un par rapport à l'autre par lesdits moyens robotisés de manipulation.

Selon une variante avantageuse, lesdits moyens robotisés de manipulation sont également conçus pour manipuler ledit deuxième élément de menuiserie 3. De manière avantageuse, lesdits moyens robotisés de manipulation incluent ainsi en outre un organe de déplacement et/ou de blocage 21 en position dudit deuxième élément de menuiserie 3. Les moyens de traitement et de commande sont alors préférentiellement conçus pour réaliser une opération de saisie du deuxième élément de menuiserie 3 par lesdits moyens robotisés de manipulation, pour l'immobiliser par rapport audit organe de déplacement et/ou de blocage en position 21. Selon cette dernière variante, lors de ladite opération de saisie du deuxième élément de menuiserie 3 par lesdits moyens robotisés de manipulation, ledit organe de déplacement et/ou de blocage en position 21 est de préférence conçu pour maintenir ledit deuxième élément de menuiserie 3 dans une position de blocage prédéterminée et enregistrée par les moyens de traitement et de commande. L'organe de déplacement et/ou de blocage 21 comprend par exemple au moins :
- un moyen de convoyage, par exemple formé par une bande transporteuse ou une pluralité de rouleau de transport, pour convoyer le deuxième élément de menuiserie 3,
- ainsi qu'une pluralité de bras de blocage, lesdits bras de blocage étant en particulier conçus pour pouvoir enserrer et maintenir en position ladite deuxième portion locale 17, comme illustré à la figure 4.

Ainsi, lesdits moyens de traitement et de commande sont préférentiellement conçus pour exécuter ladite opération de positionnement préalable desdits premier et deuxième éléments de menuiserie 2, 3, à partir à la fois de ladite position de blocage dudit deuxième élément de menuiserie 3 et de ladite position de mise en référence dudit premier élément de menuiserie 2. En d'autres termes, la détermination de ladite position de blocage et de ladite position de mise en référence permet de connaître avec précision la position relative des première et deuxième portions locale 16, 17, avant même l'engondage des premier et deuxième éléments de menuiserie 2, 3 ensemble.

## Revendications

1. Poste d'engondage (1) automatisé pour engonder ensemble des premier et deuxième éléments de menuiserie (2, 3) pourvus respectivement de premier et deuxième composants de gond (4, 5), lesdits premier et deuxième éléments de menuiserie (2, 3) formant respectivement un ouvrant et un dormant ou inversement, ledit poste d'engondage (1) comprenant :
- des moyens robotisés de manipulation pour manipuler au moins ledit premier élément de menuiserie (2), lesdits moyens robotisés de manipulation incluant un organe de préhension (6) dudit premier élément de menuiserie (2),
- un dispositif de bridage (8) embarqué par ledit organe de préhension (6) et monté mobile par rapport à ce dernier,
- un premier capteur de position (9) embarqué par ledit dispositif de bridage (8),
ledit poste d'engondage (1) comprenant des moyens de traitement et de commande conçus pour exécuter la séquence d'opérations suivante :
- saisie du premier élément de menuiserie (2) par lesdits moyens robotisés de manipulation, pour l'immobiliser par rapport audit organe de préhension (6),
- mise en butée du dispositif de bridage (8) contre le premier élément de menuiserie (2), ledit dispositif de bridage (8) étant ainsi situé à une distance prédéterminée de, et/ou en butée contre, ledit premier composant de gond (4),
- détermination d'une première position de référence correspondant à la position dudit premier capteur de position (9) par rapport audit premier composant de gond (4),
- détection de la position dudit deuxième composant de gond (5) au moyen dudit premier capteur de position (9),
- déplacement relatif primaire desdits premier et deuxième éléments de menuiserie (2, 3) par lesdits moyens robotisés de manipulation, pour amener lesdits premier et deuxième composants de gond (4, 5) dans une position relative de coopération primaire qui est déterminée à partir à la fois de ladite première position de référence et de la position détectée dudit deuxième composant de gond (5), ladite position relative de coopération primaire permettant d'attacher lesdits premier et deuxième composants de gond (4, 5) l'un à l'autre pour relier ensemble lesdits premier et deuxième éléments de menuiserie (2, 3).

2. Poste d'engondage (1) selon la revendication précédente, **caractérisé en ce que** pendant ladite opération de détection de la position dudit deuxième composant de gond (5), les moyens de traitement et de commande sont conçus pour amener lesdits moyens robotisés de manipulation à déplacer le premier élément de menuiserie (2) relativement audit deuxième élément de menuiserie (3) au voisinage, et de préférence le long, de ce dernier, pour que le premier capteur de position (9) effectue au moins une opération de balayage du deuxième composant de gond (5), ladite opération de balayage du deuxième composant de gond (5) comprenant de préférence au moins un balayage primaire selon une direction primaire, de préférence verticale, du deuxième composant de gond (5) par le premier capteur de position (9), pour détecter des données primaires de positionnement, de préférence de positionnement vertical, dudit deuxième composant de gond (5) relativement au premier composant de gond (4), lesdites données primaires de positionnement dudit deuxième composant de gond (5) comprenant de préférence au moins :
- une donnée de position d'une extrémité du deuxième composant de gond (5), de préférence une donnée primaire d'altitude, et/ou
- une donnée de position d'une différence de relief à la surface dudit deuxième composant de gond (5), de préférence une donnée secondaire d'altitude.

3. Poste d'engondage (1) selon l'une quelconque des revendications précédentes, où lesdits premier et deuxième éléments de menuiserie (2, 3) sont également pourvus respectivement de troisième et quatrième composants de gond (14, 15), **caractérisé en ce que** ledit poste d'engondage (1) comprend en outre un second capteur de position (23) embarqué par ledit organe de préhension (6), et **en ce que** lesdits moyens de traitement et de commande sont également conçus pour exécuter la séquence d'opérations suivante :
- mise en référence du premier élément de menuiserie (2) par mise en butée de ce dernier contre ledit organe de préhension (6), par exemple par gravité, au voisinage du troisième composant de gond (4), ladite mise en butée étant ainsi réalisée à une distance prédéterminée de ce dernier,
- détermination d'une seconde position de référence correspondant à la position dudit second capteur de position (23) par rapport audit troisième composant de gond (14),
- détection de la position dudit quatrième composant de gond (15) au moyen dudit second capteur de position (23),
- déplacement relatif secondaire desdits premier et deuxième éléments de menuiserie (2, 3) par lesdits moyens robotisés de manipulation, pour amener lesdits troisième et quatrième composants de gond (14, 15) dans une position relative de coopération secondaire qui est déterminée à partir à la fois de ladite seconde position de référence et de la position détectée dudit quatrième composant de gond (5), ladite position relative de coopération secondaire permettant d'attacher lesdits troisième et quatrième composants de gond (14, 15) l'un à l'autre pour relier ensemble lesdits premier et deuxième éléments de menuiserie (2, 3).

4. Poste d'engondage (1) selon la revendication précédente, **caractérisé en ce que** pendant ladite opération de détection de la position dudit quatrième composant de gond (15), les moyens de traitement et de commande sont conçus pour amener lesdits moyens robotisés de manipulation à déplacer le premier élément de menuiserie (2) relativement audit deuxième élément de menuiserie (3) au voisinage, et de préférence le long, de ce dernier, pour que le second capteur de position (23) effectue au moins une opération de balayage du quatrième composant de gond (15), ladite opération de balayage du quatrième composant de gond (15) comprenant de préférence au moins un balayage tertiaire selon une direction tertiaire, de préférence horizontale, du quatrième composant de gond (15) par le second capteur de position (23), pour détecter des données tertiaires de positionnement, de préférence de positionnement horizontal, dudit quatrième composant de gond (15) relativement au troisième composant de gond (14).

5. Poste d'engondage (1) selon l'une quelconque des revendications précédentes, **caractérisé en ce que** ledit dispositif de bridage (8) est monté à coulissement relativement audit organe de préhension (6) selon au moins une première direction, pour que, lors de l'opération de mise en butée du dispositif de bridage (8) contre le premier élément de menuiserie (2), le dispositif de bridage (8) se déplace selon ladite première direction jusqu'à venir se plaquer contre une première face dudit premier élément de menuiserie (2), le dispositif de bridage (8) étant de préférence conçu pour venir en butée contre le premier composant de gond (4), supprimant ainsi au moins un premier degré de liberté à ce dernier.

6. Poste d'engondage (1) selon la revendication précédente, **caractérisé en ce que** ledit dispositif de bridage (8) est monté à coulissement relativement audit organe de préhension (6) selon au moins une deuxième direction, pour que, lors de l'opération de mise en butée du dispositif de bridage (8) contre le premier élément de menuiserie (2), le dispositif de bridage (8) se déplace selon ladite deuxième direction jusqu'à venir se plaquer contre une deuxième face dudit premier élément de menuiserie (2), le dispositif de bridage (8) étant de préférence conçu pour venir en butée contre le premier composant de gond (4), supprimant ainsi au moins un deuxième degré de liberté à ce dernier.

7. Poste d'engondage (1) selon l'une quelconque des revendications précédentes, **caractérisé en ce que** lesdits premier et deuxième éléments de menuiserie (2, 3) sont destinés à former, une fois engondés l'un à l'autre, un assemblage de menuiserie à soufflet ou oscillo-battant, par exemple une fenêtre à soufflet, un vantail, une fenêtre ou une porte-fenêtre oscillo-battante, et **en ce que** l'un desdits premier et deuxième composants de gond (4, 5) est formé par un compas d'entrebâillement, lequel comprend au moins :
- un palier ouvrant (10) destiné à être relié à rotation à l'autre desdits premier et deuxième composants de gond (4, 5),
- un bras de compas (13) solidaire dudit palier ouvrant (10), ledit bras de compas (13) étant d'une part, directement relié à rotation à l'un desdits premier et deuxième éléments de menuiserie (2, 3), et d'autre part, par l'intermédiaire dudit palier ouvrant (10), destiné à être relié à rotation à l'autre desdits premier et deuxième éléments de menuiserie (2, 3).

8. Poste d'engondage (1) selon l'une quelconque des revendications précédentes, **caractérisé en ce que** lesdits moyens robotisés de manipulation sont également conçus pour manipuler ledit deuxième élément de menuiserie (3), lesdits moyens robotisés de manipulation incluant ainsi en outre un organe de déplacement et/ou de blocage en position (21) dudit deuxième élément de menuiserie (3), les moyens de traitement et de commande étant conçus pour réaliser une opération de saisie du deuxième élément de menuiserie (3) par lesdits moyens robotisés de manipulation, pour l'immobiliser par rapport audit organe de déplacement et/ou de blocage en position (21).

9. Poste d'engondage (1) selon la revendication précédente, **caractérisé en ce que**, lors de ladite opération de saisie du deuxième élément de menuiserie (3) par lesdits moyens robotisés de manipulation, ledit organe de déplacement et/ou de blocage en position (21) est conçu pour maintenir ledit deuxième élément de menuiserie (3) dans une position de blocage prédéterminée et enregistrée par les moyens de traitement et de commande.

10. Poste d'engondage (1) selon l'une quelconque des revendications précédentes, **caractérisé en ce que**, lors de l'opération de saisie du premier élément de menuiserie (2) par lesdits moyens robotisés de manipulation, ledit organe de préhension (6) est conçu pour positionner le premier élément de menuiserie (2) dans une position de mise en référence relativement à l'organe de préhension (6), celle-ci étant prédéterminée et enregistrée par les moyens de traitement et de commande.

11. Poste d'engondage (1) selon la revendication précédente, **caractérisé en ce que** ledit organe de préhension (6) comprend des moyens de retenue (18, 19), par exemple une pluralité de ventouses (18) et/ou de griffes (19), et comprend en outre des moyens de butée (20), et **en ce que** ladite opération de saisie du premier élément de menuiserie (2) par lesdits moyens robotisés de manipulation comprend au moins la séquence de sous-opérations suivante :
- première solidarisation du premier élément de menuiserie (2) et des moyens de retenue (18, 19), le premier élément de menuiserie (2) étant dans une position préalable de saisie relativement à l'organe de préhension (6),
- embarquement du premier élément de menuiserie (2) par ledit organe de préhension (6),
- basculement du premier élément de menuiserie (2) par ledit organe de préhension (6),
- désolidarisation au moins partielle du premier élément de menuiserie (2) et des moyens de retenue (18, 19), pour faire glisser par gravité le premier élément de menuiserie (2) jusqu'à ce que qu'il rentre en contact avec les moyens de butée (20),
- deuxième solidarisation du premier élément de menuiserie (2) et des moyens de retenue (18, 19), le premier élément de menuiserie (2) étant alors dans ladite position de mise en référence relativement à l'organe de préhension (6).

12. Poste d'engondage (1) selon la revendication 9 ainsi que selon la revendication 10 ou 11, **caractérisé en ce que** lesdits moyens de traitement et de commande sont conçus pour exécuter ladite opération de positionnement préalable desdits premier et deuxième éléments de menuiserie (2, 3), à partir à la fois de ladite position de blocage dudit deuxième élément de menuiserie (3) et de ladite position de mise en référence dudit premier élément de menuiserie (2).

13. Poste d'engondage (1) selon l'une quelconque des revendications précédentes, **caractérisé en ce que** lesdits premier et deuxième composants de gond (4, 5) comprennent respectivement un palier ouvrant (10) et un palier dormant (11), ledit palier dormant (11) étant conçu pour accueillir en son sein ledit palier ouvrant (10) dans ladite position relative de coopération primaire.

14. Poste d'engondage (1) selon l'une quelconque des revendications précédentes, **caractérisé en ce que** lesdits premier et deuxième composants de gond (4, 5) comprennent respectivement des premier et deuxième évidements, pour que dans ladite position relative de coopération primaire, lesdits premier et deuxième évidements soient positionnés dans le prolongement l'un de l'autre, l'un desdits premier et deuxième composants de gond (4, 5) comprenant en outre un axe de liaison (12) monté mobile, de préférence à translation, par rapport au reste dudit composant de gond (4, 5), et **en ce que** ledit poste d'engondage (1) comprend un moyen de poussoir (22), par exemple un vérin, conçu pour pousser ledit axe de liaison (12), de préférence vers le haut, pour qu'il s'insère à la fois dans lesdits premier et deuxième évidements, reliant ainsi à rotation lesdits premier et deuxième composants de gond (4, 5) l'un à l'autre.

15. Procédé d'engondage automatisé pour engonder ensemble des premier et deuxième éléments de menuiserie (2, 3) pourvus respectivement de premier et deuxième composants de gond (4, 5) à l'aide d'un poste d'engondage (1), lesdits premier et deuxième éléments de menuiserie (2, 3) formant respectivement un ouvrant et un dormant ou inversement, ledit poste d'engondage (1) comprenant :
- des moyens robotisés de manipulation pour manipuler au moins ledit premier élément de menuiserie (2), lesdits moyens robotisés de manipulation incluant un organe de préhension (6) dudit premier élément de menuiserie (2),
- un dispositif de bridage (8) embarqué par ledit organe de préhension (6) et monté mobile par rapport à ce dernier,
- un premier capteur de position (9) embarqué par ledit dispositif de bridage (8),
- des moyens de traitement et de commande,
dans lequel les moyens de traitement et de commande exécutent la séquence d'opérations suivante :
- saisie du premier élément de menuiserie (2) par lesdits moyens robotisés de manipulation, pour l'immobiliser par rapport audit organe de préhension (6) ;
- mise en butée du dispositif de bridage (8) contre le premier élément de menuiserie (2), ledit dispositif de bridage (8) étant ainsi situé à une distance prédéterminée de, et/ou en butée contre, ledit premier composant de gond (4),
- détermination d'une première position de référence correspondant à la position dudit premier capteur de position (9) par rapport audit premier composant de gond (4),
- détection de la position dudit deuxième composant de gond (5) au moyen dudit premier capteur de position (9),
- déplacement relatif primaire desdits premier et deuxième éléments de menuiserie (2, 3) par lesdits moyens robotisés de manipulation, pour amener lesdits premier et deuxième composants de gond (4, 5) dans une position relative de coopération primaire qui est déterminée à partir à la fois de ladite première position de référence et de la position détectée dudit deuxième composant de gond (5), ladite position relative de coopération primaire permettant d'attacher lesdits premier et deuxième composants de gond (4, 5) l'un à l'autre pour relier ensemble lesdits premier et deuxième éléments de menuiserie (2, 3).
